(19) Europäisches Patentamt / European Patent Office / Office européen des brevets

(11) **EP 3 469 574 B1**

(12) **EUROPEAN PATENT SPECIFICATION**

(45) Date of publication and mention
of the grant of the patent:
**19.02.2025 Bulletin 2025/08**

(21) Application number: **17813689.1**

(22) Date of filing: **07.06.2017**

(51) International Patent Classification (IPC):
**G09F 19/14** (2006.01)      **G02B 27/60** (2006.01)
**G02B 30/27** (2020.01)

(52) Cooperative Patent Classification (CPC):
**G09F 19/14**

(86) International application number:
**PCT/SE2017/050598**

(87) International publication number:
**WO 2017/217910 (21.12.2017 Gazette 2017/51)**

(54) **SYNTHETIC IMAGE AND METHOD FOR MANUFACTURING THEREOF**

SYNTHETISCHES BILD UND VERFAHREN ZUR HERSTELLUNG DAVON

IMAGE SYNTHÉTIQUE ET PROCÉDÉ DE FABRICATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2016 SE 1650830**

(43) Date of publication of application:
**17.04.2019 Bulletin 2019/16**

(73) Proprietor: **Rolling Optics Innovation AB**
**171 54 Solna (SE)**

(72) Inventor: **PARRAT, Daniel**
**SE-752 60 Uppsala (SE)**

(74) Representative: **AWA Sweden AB**
**Box 5117**
**200 71 Malmö (SE)**

(56) References cited:
WO-A1-2013/163287      WO-A2-2005/031687
US-A- 5 844 713      US-A1- 2008 037 131

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 3 469 574 B1

## Description

### TECHNICAL FIELD

The present invention relates in general to optical devices and manufacturing processes therefore, and in particular to synthetic-image devices and manufacturing methods therefore.

### BACKGROUND

The field of synthetic images has developed fast during the last years. Synthetic-image devices are today used for creating eye-catching visual effects for many different purposes, e.g. as security markings, tamper indications or simply as aesthetic images. Usually, the synthetic-image device is intended to be provided as a label or as an integrated part in another device. Many different optical effects have been discovered and used and often different optical effects are combined to give a certain requested visual appearance.

A typical realization of a synthetic-image device is a thin polymer foil, where focusing elements and image objects are created in different planes. The typical approach for a synthetic-image device is to provide an array of small focusing element. The focusing element may be different kinds of lenses, apertures or reflectors. An image layer is provided with image objects. The image layer is provided relative to the array of focusing elements such that when the device is viewed from different angles, different parts of the image objects are enlarged by the focusing elements and together form an integral image. Depending on the design of the image objects, the synthetic image can change in different ways when the viewing conditions, e.g. viewing angles, are changed. The actual perception of the synthetic image is performed by the user's eyes and brain. The ability of the human brain to combine different part information into a totality converts the fragmented part images from the individual focusing elements into an understandable synthetic image. This ability to create an understandable totality can also be used for creating "surprising effect", which can be used as eye-catching features or for security and/or authentication purposes. However, the manner in which the brain correlates different fragments may in some cases result in unexpected difficulties to create an understandable totality.

In the published US patent application US 2008/0037131 A1, a micro-optic security and image presentation system is disclosed. The device includes an in-plane image formed of an array or pattern of image icons and an array of focusing elements. The system produces two different synthetic images whereby one synthetic image operates to modulate or control the extent of the appearance of another synthetic image. The array of image icons forms an in-plane synthetic image, while the interaction of the array of focusing elements with the array of image icons forms a separate synthetically magnified image that serves to control the field of view of the in-plane image and serves to modulate or control the extent of appearance of the in-plane image. The appearance of the in-plane image visually appears and disappears depending upon the viewing angle of the system.

### SUMMARY

A general object with the herein presented technology is to improve the ability for interpretation of synthetic images.

The above object is achieved by methods and devices according to the independent claims. Preferred embodiments are defined in dependent claims.

In general words, in a first aspect, a synthetic-image device comprises an image layer and a focusing element array. The image layer is arranged in a vicinity of a focal distance of focusing elements of the focusing element array. The image layer comprises composite image objects. The composite image objects of said image layer being a conditional merging of at least a first set of image objects, an envelope area associated with said first set of image objects and a second set of image object. The first set of image objects is arranged for giving rise to at least a first synthetic image at a non-zero height or depth when being placed in a vicinity of a focal distance of focusing elements and viewed through the focusing element array. Likewise, said second set of image objects is arranged for giving rise to at least a second synthetic image at a non-zero height or depth when being placed in a vicinity of a focal distance of focusing elements and viewed through the focusing element array. The first synthetic image and the second synthetic image are provided at different heights/depths and at certain viewing angles cover each other. The envelope area of the first set of image objects is an area covering the first set of image objects and further comprises a margin area not covering the first set of image objects. The conditional merging is constituted by that the composite image objects are present only in points where the first set of image objects exists or in points where the second set of image objects exists but the envelope area associated with the first set of image objects does not exist.

In a second aspect, a method for producing a synthetic-image device, comprises creation of a numerical representation of a first set of image objects. The first set of image objects is arranged for giving rise to at least a first synthetic image at a non-zero height or depth when being placed in a vicinity of a focal distance of focusing elements and viewed through that focusing element array. A numerical representation of a second set of image objects is created. The second set of image objects is arranged for giving rise to at least a second synthetic image at a non-zero height or depth when being placed in a vicinity of a focal distance of focusing elements and viewed through that focusing element array. A numerical representation of an envelope area is created. The envelope area is associated with the first set of image objects. The envelope area of the first set of image objects is an area covering the first set of image objects and further comprising a margin area not covering the first set of image objects. The numerical representation of the first set of image objects and the numerical representation of the envelope area associated with the first set of image objects is merged with the numerical representation of the second set of image object according to a predetermined condition into a numerical representation of composite image objects. The conditional merging is such that the composite image objects are present only in points where the first set of image objects exists or in points where the second set of image objects exists but the envelope area associated with the first set of image objects does not exist. An image layer is formed according to the numerical representation of composite image objects. A focusing element array is formed. The image layer is arranged in a vicinity of a focal distance of focusing elements of the focusing element array.

One advantage with the proposed technology is that synthetic images are provided, which are experienced by the human eye in a clear and distinctive manner. Other advantages will be appreciated when reading the detailed description.

BRIEF DESCRIPTION OF THE DRAWINGS

The invention, together with further objects and advantages thereof, may best be understood by making reference to the following description taken together with the accompanying drawings, in which:

FIGS. 1A-C are schematic drawings of synthetic-image devices utilizing different focusing elements;
FIG 2 is a schematic drawing illustrating viewing from different angles;
FIGS. 3A-B illustrate the formation of a synthetic image for two different viewing angles;
FIGS 4A-C illustrate the ideas of forming an example of an integral synthetic-image device;
FIG. 5 illustrate another example of an integral synthetic-image device;
FIG. 6 illustrates an example of how a three-dimensional image can be created;
FIG. 7 is an example of image objects of an integral synthetic-image device;
FIG. 8 illustrates an example of a merging of two sets of image objects;
FIGS. 9A-B illustrate an embodiment of a conditional merging of two sets of image objects;
FIGS. 10A-B illustrate another embodiment of a conditional merging of two sets of image objects;
FIG. 11A is an illustration of an example of another conditional merging of two sets of image objects;
FIG. 11B is another illustration of an example of another conditional merging of two sets of image objects;
FIG. 12A is an illustration of an example of yet another conditional merging of two sets of image objects;
FIG. 12B-C are illustrations of examples of synthetic images as seen from different viewing angles of the conditional merging of Fig. 12A;
FIG. 13A is an illustration of an example of a synthetic image created from a conditional merging of sets of image objects;
FIG. 13B is an illustration of an example of a synthetic image created from another conditional merging of sets of image objects;
FIG. 14A is an illustration of an example of yet another conditional merging of two sets of image objects;
FIG. 14B-C are illustrations of examples synthetic images as seen from different viewing angles of the conditional merging of Fig. 14A;
FIG. 15 is an illustration of an example of a synthetic image created from a conditional merging of sets of image objects;
FIG. 16 is an illustration of an example of a synthetic image created from a conditional merging of sets of image objects;
FIGS. 17A-B are illustrations of examples of synthetic images created from a conditional merging of a plurality of sets of image objects;
FIG. 18 is an illustration of an example of a conditional merging of a plurality of sets of image objects;
FIG. 19 is an illustration of an example of a three-dimensional synthetic image created from a conditional merging of a plurality of sets of image objects;
FIG. 20 is a flow diagram of steps of an embodiment of a method for producing a synthetic-image device;
FIG. 21 is a flow diagram of steps of another example of a method for producing a synthetic-image device;
FIG. 22A illustrates an example of a relation between hexagonal cells and focusing elements in a hexagonal pattern;
FIG. 22B illustrates an example of a relation between rectangular cells and focusing elements in a hexagonal pattern;
FIG. 23A-I illustrate other examples of relations between differently shaped cells and focusing elements in a hexagonal pattern;
FIG. 24 is a flow diagram of steps of another example of a method for producing a synthetic-image device;

FIG. 25A illustrates an example of a relation between cells, having multiple copies of sets of image objects, and focusing elements in a hexagonal pattern;

FIG. 25B illustrates an example of a relation between cells, having different magnification in different directions, and focusing elements in a hexagonal pattern;

FIG. 25C illustrates an example of a relation between cells, having multiple copies of sets of image objects and different magnification in different directions, and focusing elements in a hexagonal pattern;

FIG. 26 is a flow diagram of steps of another example of a method for producing a synthetic-image device;

FIG. 27 illustrates an example of cells, having a set of image objects giving rise to a synthetic image and a set of image objects giving a partial background colouring;

FIG. 28 is an example illustration of the optical situation when a synthetic-image device is illuminated by a point source from a short distance;

FIG. 29 is a diagram illustrating the relation between magnification and efficient lens period; and

FIG. 30 is a flow diagram of steps of an example of a method for authentication of a synthetic-image device.

## DETAILED DESCRIPTION

Throughout the drawings, the same reference numbers are used for similar or corresponding elements.

For a better understanding of the proposed technology, it may be useful to begin with a brief overview of synthetic-image devices.

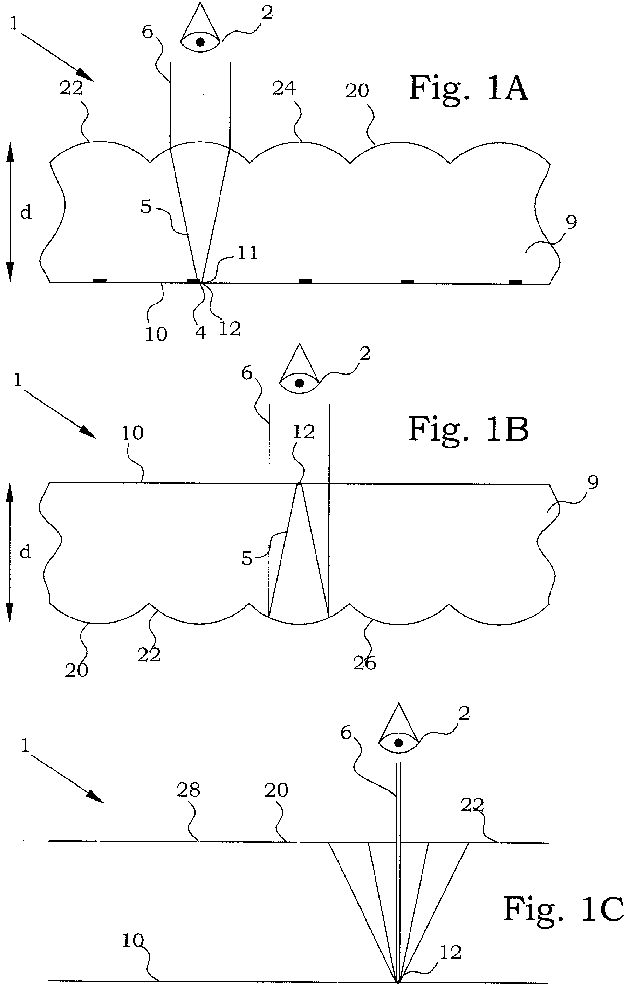

Fig. 1A schematically illustrates one example of a synthetic-image device 1. The synthetic-image device 1 comprises a focusing element array 20 of focusing elements 22. In this example, the focusing element is a lens 24. In a typical case, where the synthetic image is intended to be essentially the same in different surface directions, the lens 24 is typically a spherical lens. In applications, where a difference between image properties in different surface directions, lenticular lenses may be used.

The synthetic-image device 1 further comprises an image layer 10 comprising image objects 12. The image objects 12 are objects that are optically distinguishable from parts 14 of the image layer 10 that are not covered by image objects 12. The image objects 12 may e.g. be constituted by printed product micro features 11 and/or embossed microstructures. The image layer 10 is arranged in a vicinity of a focal distance d of the focusing elements 22 of the focusing element array 20. This means that a parallel beam 6 of light impinging on a focusing element 22 will be refracted 5 and focused at one point or small area 4 at the image layer 10. Likewise, light emanating from one point at the image layer 10 will give rise to a parallel beam 6 of light when passing the focusing elements 22. A point at an image object 12 will therefore appear to fill the entire surface of the focusing element 22 when viewed from a distance in the direction of the produced parallel beam 6 by a viewer, schematically illustrated by the eye 2. The material 9 between the image layer 10 and the focusing element array 20 is at least partly transparent and is typically constituted by a thin polymer foil.

The distance d does not have to be exactly equal to the focusing distance of the focusing elements 22. First, there is always a certain degree of aberrations, which anyway broadens the area from which the optical information in a parallel beam 6 is collected. This appears more at shallower angles and in order to have a more even general resolution level, a distance in a vicinity, but not exactly equal to the focal distance may be beneficially selected. Furthermore, since the focusing element surface has a certain two-dimensional extension, also this surface could be used to produce fine objects of the total synthetic image. In such cases, fine objects of a small area on the image layer 10 may be beneficial to enlarge to cover the surface of the focusing element, which means that also in such a case, the actual selected distance d is selected to be in a vicinity, but not exactly equal to the focal distance. Such circumstances are well known in the art of synthetic images.

By arranging the image objects 12 of the image layer 10 in a suitable manner, the part images produced at each individual focusing element 22 surface will collectively be perceived by a viewer 2 as a synthetic image. Different images may be displayed for the viewer when the synthetic-image device 1 is viewed in different directions, which opens up for creating different kinds of optical effects, as will be described further below.

Fig. 1B schematically illustrates another example of a synthetic-image device 1. In this embodiment, the focusing elements 22 are constituted by concave mirrors 26. The image layer 10 is here situated on the front surface with reference to the viewer 2 and the focusing element array 20 is situated behind the image layer 10. The rays 5 of light travelling from the image objects to the viewer 2 pass the material 9 of the synthetic-image device twice.

Fig. 1C schematically illustrates yet another example of a synthetic-image device 1. In this embodiment, the focusing elements are pinholes 28, restricting the light coming from the image layer 10 and passing through to the viewer 2. In this embodiment, the synthetic image is built by the narrow light beams passing the pinholes 28, and are typically only providing "light" or "dark". Since the pinholes 28 doesn't have any enlarging effect, most of the viewed surface does not contribute to the synthetic image.

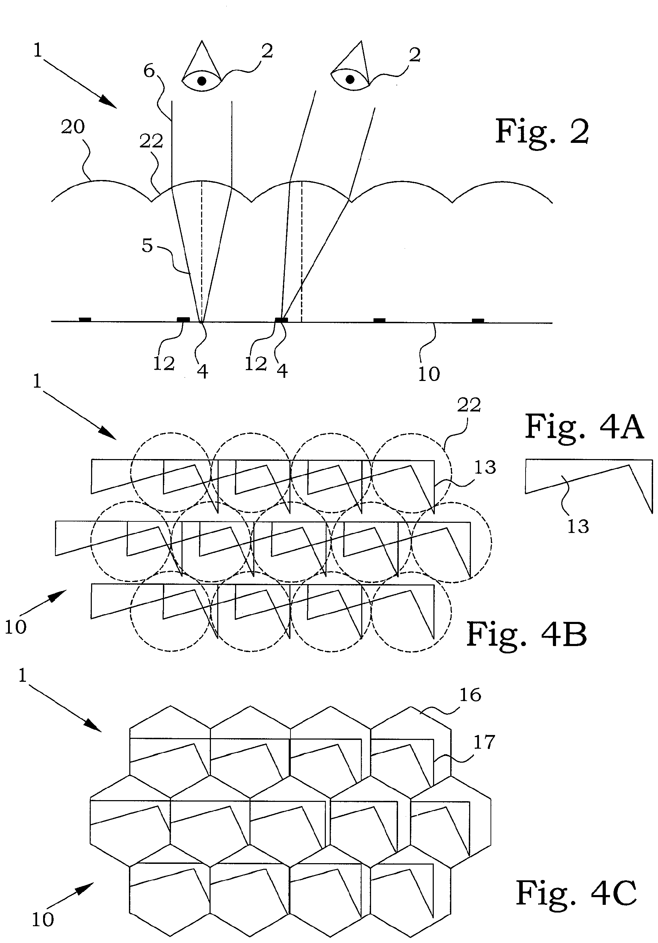

Fig. 2 illustrates schematically the selection of different part areas 4 of the image layer 10. The image layer 10 comprises image objects 12. When the synthetic-image device 1 is viewed in a perpendicular direction with reference to the main surface of the synthetic-image device 1, as illustrated in the left part of the drawings, the area 4 that is enlarged by the focusing element 22 is situated at the centre line, illustrated in the figure by a dotted line, of the focusing element 22. If an image object 12 is present at that position, an enlarged version is presented at the surface of the synthetic-image device 1. However, as in the case of Fig. 2, no image object is present, and there will be no enlarged image at the surface of the synthetic-image device 1.

When viewing the synthetic-image device 1 at another angle, as e.g. illustrated in the right part of the figure, the area 4 on which the focusing element 22 focuses is shifted at the side. In the illustrated situation, the area 4 overlaps with at least a part of an image object 12 and an enlarged version can be seen at the surface of the synthetic-image device 1. In this way, the images presented at the surface of the synthetic-image device 1 may change for different viewing angles, which can be used for achieving different kinds of optical effects of the synthetic images.

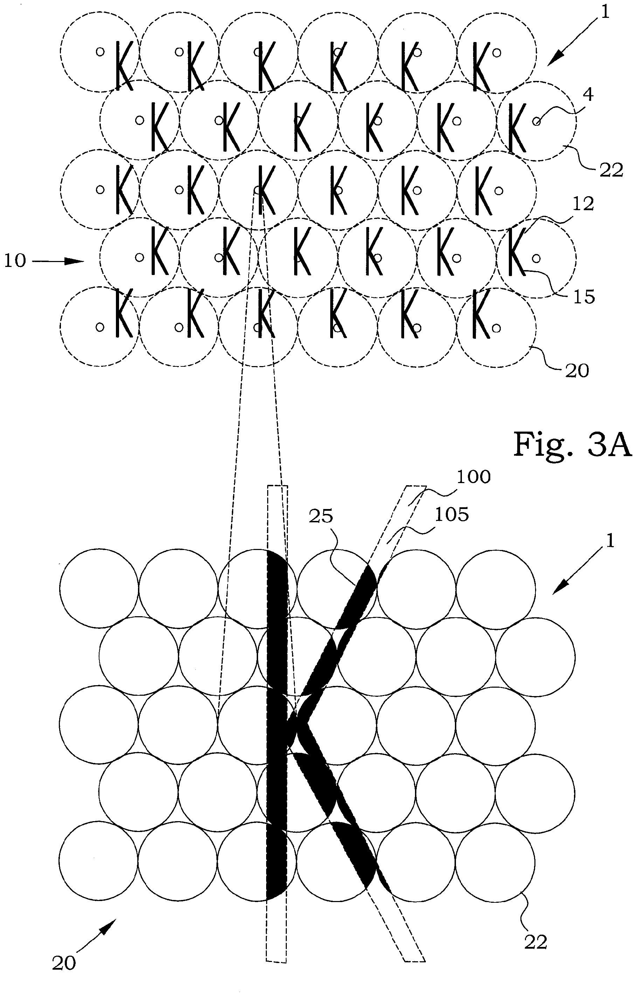

One type of synthetic image is a so-called moiré image. The moiré effect is well known since many years and is based on the cooperation of two slightly mismatching arrays. Fig. 3A schematically illustrates in the upper part an example of a part of an image layer 10. The image layer 10 comprises a repetitive pattern 15 of image objects 12. In this example, the image objects 12 are selected to be the letter "K". Focusing elements 22 associated with the illustrated part of the image layer 10 are illustrated by dotted circles, to indicate the relative lateral position. Both the repetitive pattern 15 of image objects 12 and the focusing element array 20 have a hexagonal symmetry. However, the distance between two neighbouring image objects 12 is slightly shorter than the distance between two neighbouring focusing elements 22 in the same direction.

An area 4 is also marked, which corresponds to the focusing area of each focusing element 22. In the illustrated case, the area 4 corresponds to a view direction straight from the front. The parts of the image objects 12 that are present within each of the areas 4 will thereby be presented in an enlarged version over the surface of the corresponding focusing element 22, here denoted as a projected image 25. In the lower part of Fig. 3A, the corresponding focusing element array 20 is illustrated including the projected images 25 of the image objects 12 of the areas 4. The dotted lines from one of the areas 4 in the upper part to one of the focusing elements 22 in the lower part illustrates the association. The different projected images at the focusing elements 22 together forms a synthetic image 100. In this case, the synthetic image 100 is a part of a large "K". If these structures are small enough, the human eye will typically fill in the empty areas between the focusing elements 22 and the viewer will perceive a full "K". The reason for the K to be produced is the existence of the slight period mismatch between the repetitive pattern 15 of image objects 12 and the focusing element array 20. In this example, using the mismatch between a repetitive image pattern 15 and an array of focusing elements 22, the synthetic image is called a moiré image 105.

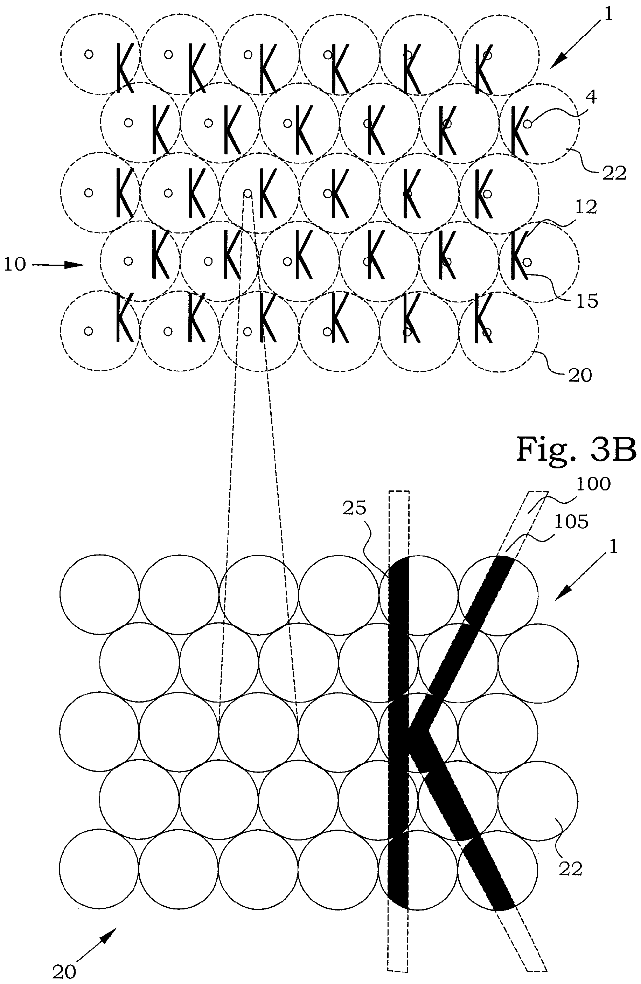

Fig. 3B schematically illustrates the same synthetic-image device 1 as in Fig. 3A, but when viewed in another direction. This corresponds to a slight tilting of the synthetic-image device 1 to the left. The areas 4 which corresponds to the focusing areas of the focusing elements 22 in this direction are thereby moved somewhat to the left. This results in that another part of the image objects 12 are projected to the focusing elements 22, as seen in the lower part of the Fig. 3B. The result of the tilting is that the synthetic image 100, i.e. the large "K" moves to the right.

The viewer will interpret such a motion as a result of a position of the large "K" at a certain imaginary depth below the surface of the synthetic-image device 1. In other words, a depth feeling is achieved. Both the magnification and the experienced depth depends on the relation between the focusing element array 20 and the repetitive pattern 15 of image objects 12. It has in prior art been shown that the obtained magnification M is determined as:

$$M = \frac{1}{F - F^2} \, , \qquad (1)$$

$$F = \frac{P_o}{P_l}$$

where                    ,

where $P_o$ is the period of the repetitive pattern 15 of image objects 12 and $P_l$ is the period of the focusing element array 20. For $P_o < P_l$, the magnification is positive, for $P_o > P_l$, the magnification becomes negative, i.e. the synthetic image 100 becomes inverted compared to the image objects 12.

The apparent image depth $d_i$ of the moiré image can also be determined as:

$$d_i = (d - R_l)/(1 - F) + R_l \, , \qquad (2)$$

where $d$ is the thickness of the synthetic-image device and $R_l$ is the radius of the curvature of the spherical microlenses. One can here notice that for $P_o < P_l$, the apparent depth is typically positive, while for $P_o > P_l$, the apparent depth becomes negative, i.e. the moiré image 105 seems to float above the surface of the synthetic-image device 1.

It should be noted that the differences in periods illustrated in Figs 3A and 3B are relatively large, which gives a relatively low magnification and a relatively small apparent depth. This is made for purposes of illustration. In typical moiré synthetic-image devices, the relative period differences may typically be much less. Period differences of less than 1% and even less than 0.1 % are not uncommon.

The moiré images have, however, certain limitations. First of all, they can only result in repetitive images. Furthermore, the size of the image objects 12 is limited to the size of the focusing elements. In Fig. 4A, an image object 13 is schematically illustrated. If this image object is repeated with almost the same period as for the focusing elements 22 of Fig. 4B, the repeated patterns of image objects 13 will overlap. The moiré image from such a structure will be almost impossible for the human brain to resolve, since parts of the image objects associated with a neighbouring focusing element 22 will interfere.

A solution is presented in Fig. 4C. Here a cell 16 of the image layer 10 is exclusively associated with each focusing element 22. Within each cell 16, only parts of an image object 17 belonging to one copy of the image object is preserved and the other interfering image objects are removed. The different image objects 17 will now not be identically repeated over the image layer 10 but instead the image objects 17 are successively changing in shape. By using these cut-out parts or fractions as the image object 17, a synthetic image will also be produced. A synthetic image based on non-identical fractioned image objects 17 within cells 16 associated with the focusing elements 22 is in this disclosure referred to as an integral synthetic image.

As long as the focusing area of the associated focusing element is kept within the cell 16 a synthetic image similar to a moiré image will be produced. However, when the focusing area of the associated focusing element enters into a neighbouring cell 16, the synthetic image will suddenly disappear and will instead appear at another position; a flip in the synthetic image occurs.

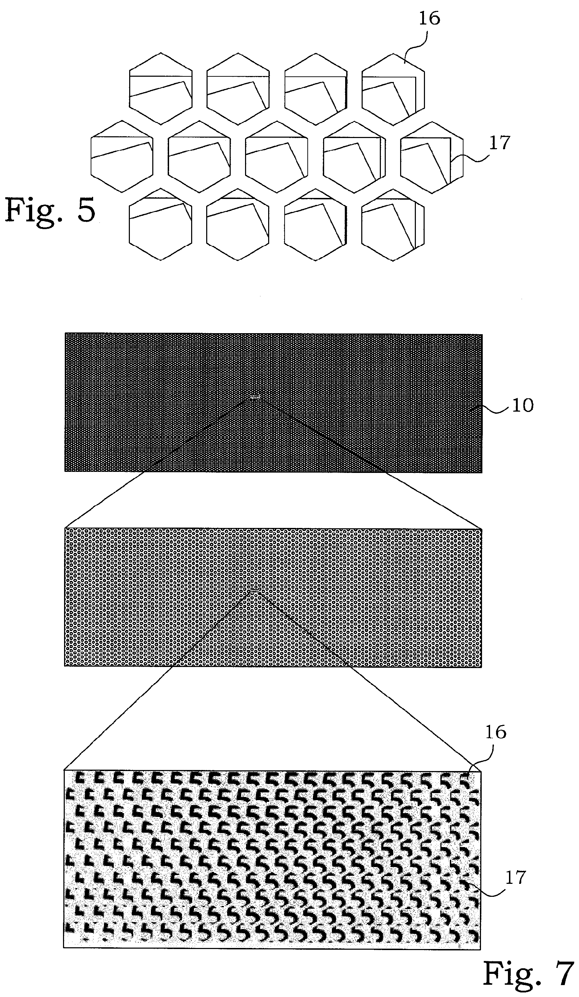

Such flipping effects may be somewhat extenuated by introducing an image object-free zone between each cell at the image layer. Fig. 5 illustrates schematically such a design. Here, each cell 16 occupies an area that is smaller than the area of an associated focusing element. The result will be that the integral synthetic image will disappear when the area of focus of the associated focusing element reaches the edge of the cell. However, a further change in viewing angle has to be provided before a "new" integral synthetic image appears. The relation with the disappearing image will then not be equally apparent.

The ideas of having cells with different image objects can be driven further. The moiré synthetic images can be given an apparent depth, but is in principle restricted to one depth only. A true three-dimensional appearance is difficult to achieve. However, when considering integral synthetic images, the freedom of changing the image objects from one cell to another can also be used e.g. to provide a more realistic three-dimensionality of the produced images.

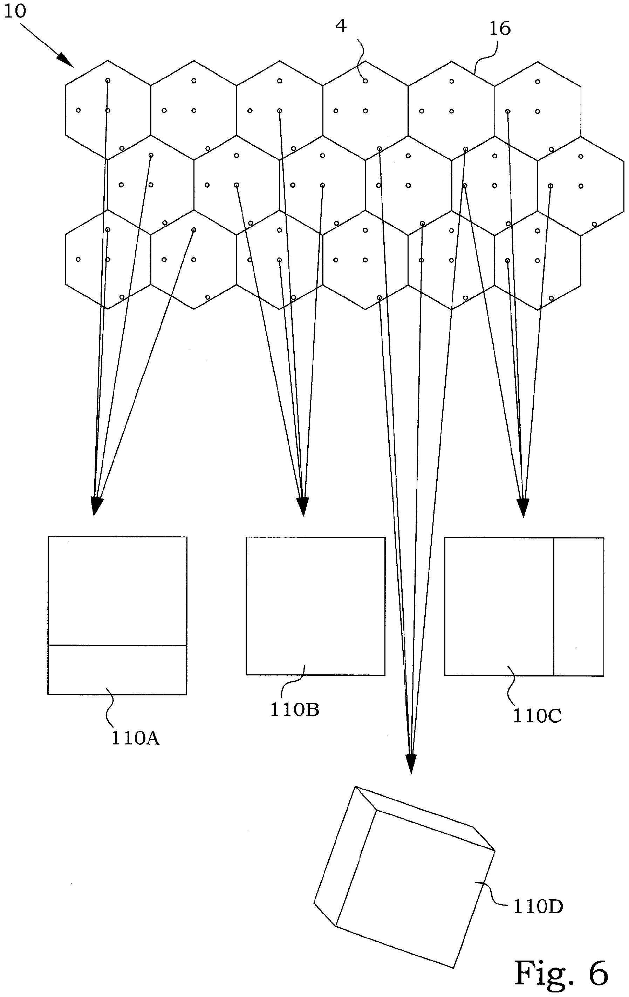

In Fig. 6, cells 16 of an image layer 10 are illustrated. Four different areas 4 for each cell 16, corresponding to focusing areas of associated focusing elements when viewed in four different directions are illustrated. Image objects of the centre area 4 in each cell corresponds to a viewing angle as achieved if the synthetic-image device is viewed in a perpendicular manner. Such image objects may then be designed such that they give rise to an integral synthetic image 110B as illustrated in the lower centre part of Fig. 6 showing a top surface of a box. Image objects of the uppermost area 4 in each cell corresponds to a viewing angle as achieved if the synthetic-image device is tilted away from the viewer. Such image objects may then be designed such that they give rise to an integral synthetic image 110A as illustrated in the lower left part of Fig. 6, showing the top surface and a front surface of a box. Image objects of the leftmost area 4 in each cell corresponds to a viewing angle as achieved if the synthetic-image device is tilted to the left with reference to the viewer. Such image objects may then be designed such that they give rise to an integral synthetic image 110C as illustrated in the lower right part of Fig. 6, showing the top surface and a side surface of a box. Image objects of the area 4 in the lower right part in each cell corresponds to a viewing angle as achieved if the synthetic-image device is tilted towards and to the right with reference to the viewer. Such image objects may then be designed such that they give rise to an integral synthetic image 110D as illustrated at the very bottom of Fig. 6, showing the top surface, a side surface and a back surface of a box. Together, these integral synthetic images 110A-D and further integral synthetic images emanating from other areas of the cells give an impression of a rotating box in a three-dimensional fashion.

In a similar fashion, by modifying the image content in each cell separately, different kinds of optical phenomena can be achieved. By adapting each part of the cell according to the requested image appearance in a corresponding viewing direction, the integral synthetic image can be caused to have almost any appearances. The so achieved image properties can be simulations of "real" optical properties, e.g. a true three-dimensional image, but the image properties may also show optical effects which are not present in "real" systems.

An example of a part of an image layer 10 of an integral synthetic-image device giving rise to an image of the figure "5" is illustrated in Fig. 7.

One effect that is possible to achieve by both moiré synthetic images and integral synthetic images is that two synthetic images can be imaged at the same time. These synthetic images have different apparent depth or height. When tiling such an optical device, the two synthetic images moves relative each according to the ordinary parallax effect. In certain viewing angles, the synthetic images may come in line of sight of each other, i.e. one object covers at least a part of the other object.

When preparing the image layer for such a synthetic optical device, different principles can be followed. If e.g. the different synthetic images are created by image objects in different colours, a simple overlay of the two image objects results in that both synthetic images are visible, but with a mix of the colours. An impression of a partially transparent front synthetic image becomes the result. However, if the front synthetic image is to be perceived as a non-transparent object, an overlap between the synthetic images should give an impression of that the back synthetic image disappear behind the front synthetic image. Thus, the image object associated with the back synthetic image has to be modified.

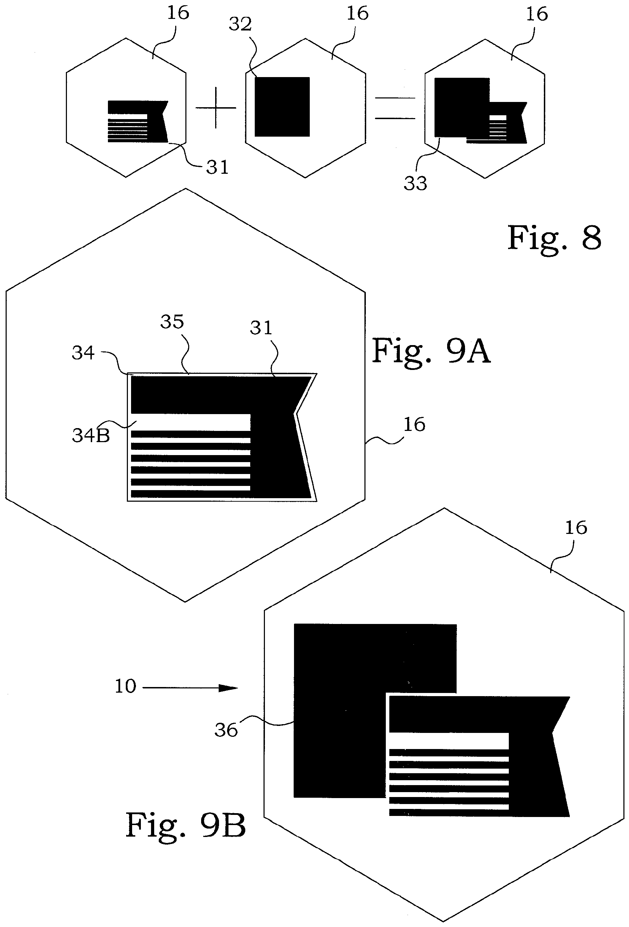

Fig. 8 schematically illustrates one cell of such a situation. The cell 16 at the left is illustrated with a first set 31 of image objects, in this particular illustration a complex figure with narrow tongues, intended to contribute to a first synthetic image at a certain apparent depth. The cell 16 in the middle is likewise illustrated with a second set 32 of image objects, in this particular illustration a square, intended to contribute to a second synthetic image at an apparent depth, larger than for the first synthetic image. A combination of these two cells gives a cell 16 as illustrated in the right part of Fig. 8. The first set 31 of image objects covers parts of the second set 32 of image objects, and such parts are therefore omitted. One may interpret it as if one cuts off such parts of the second set 32 of image objects that overlaps with the first set 31 of image objects. A composite image object 33 is thereby created by adding selected parts of the second set 32 of image objects to the first set 31 of image objects.

Note that, typically, there are no image layers produced with the separate image objects 31 and 32 of the left and middle cells. They are presented here only for simplify the discussion. Typically, an image layer with the composite image object 33 is created directly.

When viewing the synthetic-image device from a direction close to the normal direction of the synthetic-image device, the first synthetic image comes in front of the second synthetic image. If both the synthetic images are based on a same or at least similar colour, it becomes difficult for the viewer to distinguish which part belongs to which object. The correlation made by the human brain between the part images provided by each focusing element is not totally obvious. The result may be that the viewer experiences a blurred image or that the depth feeling, at least partly, disappears. In particular in cases where narrow structures, as the tongues of the first set 31 of image objects, are involved, the composite image often becomes deteriorated.

In one embodiment, a synthetic-image device, comprises an image layer and a focusing element array. The image layer is, as was described earlier, arranged in a vicinity of a focal distance of focusing elements of the focusing element array. The image layer comprises composite image objects. These composite image objects of the image layer array are a conditional merging of at least a first set of image objects, an envelope area associated with the first set of image objects and a second set of image objects. The first set of image objects is arranged for giving rise to at least a first synthetic image at a non-zero height or depth when being placed in a vicinity of a focal distance of focusing elements and viewed through the focusing element array. Likewise, the second set of image objects is arranged for giving rise to at least a second synthetic image at a non-zero height or depth when being placed in a vicinity of a focal distance of focusing elements and viewed through the focusing element array. The envelope area of the first set of image objects is an area covering the first set of image objects and further comprises a margin area not covering the first set of image objects. The conditional merging being that the composite image objects are present only in points where the first set of image objects exists or in points where the second set of image objects exists but the envelope area associated with the first set of image objects does not exist.

The idea is to introduce a margin when deciding which parts of the first set of image objects that are going to be cut away. Instead of only cutting such parts that are directly overlapping, also some parts outside the first set of image objects may be removed. The envelope area thereby operates as a mask to decide which parts of the first set of image objects that are to be removed.

In Fig. 9A, a cell 16 is illustrated with a first set 31 of image objects, in this particular illustration the complex figure with narrow tongues used in Fig. 8, intended to contribute to a first synthetic image. In Fig. 9A, an envelope area 35 is illustrated. This envelope area 35 covers the first set 31 of image objects. The envelope area 35 further comprises a margin area 34. The margin area 34 does not cover the first set 31 of image objects. Instead, the margin area 34 is used to create a buffer zone outside the first set 31 of image objects where no disturbing other objects are to be allowed. In this particular embodiment, the margin area 34 comprises a narrow rim 34A around the entire first set 31 of image objects. In other words, the envelope area 35 has a main shape that is congruent with an envelope of the image objects of said first set 31 of image objects. This prohibits a confusion between the outer borders a first synthetic image and a second synthetic image at least partially overlapping each other. Furthermore, the margin area also covers the entire area 34B between the upper broad tongue and the uppermost narrow tongue of the first set 31 of image objects. This prohibits an underlying second synthetic image to disturb the appearance of the interior of an overlying first synthetic image.

By combining the first set 31 of image objects with a second set 32 of image objects, in this particular embodiment similar to the second set 32 of image objects of Fig. 8, using the envelope area 35 as a masking for the second set 32 of image objects, composite image objects 36 are created. Selected parts of the second set 32 of image objects are added to the first set 31 of image objects, however, now masked by the envelope area 35 rather than by the first set 31 of image objects itself.

When such composite image objects 36 are created for a portion of the image layer, the synthetic-image device gives rise to a combined synthetic image composed by the first synthetic image based on the first set of image objects and the second synthetic image based on the second set of image objects. When the parallax effect brings the first synthetic image to cover at least a part of the second synthetic image, the use of the envelope area 35 as a masking facilitates the interpretation made by the human brain about which parts that belongs to which structure. A more clear combined synthetic image is thus produced.

The width of the narrow rim 34A is selected to be large enough to assist the eye to separate the different synthetic images. At the same time, it is preferred that the narrow rim 34A is narrow enough not to constitute a synthetic image at its own. The actual sizes depends on different parameters, such as magnification, focusing element aberration, focusing element strength etc. and could be adapted for different applications. Anyone skilled in the art knows how large a feature in the image objects has to be to be seen and how small a feature in the image objects has to be not to be seen. If there are doubts, a simple test with a range of different margins areas can be performed and a preferred size can be determined by just observing the produced synthetic images. Such tests of different design features are commonly used in the art. In a particular embodiment, an average width of objects of the margin area is within the range of 0.1% to 10% of a diameter of the focusing elements.

Each of the first synthetic image and the second synthetic image can be a moiré image or an integral synthetic image.

In a particular embodiment, at least one of the first synthetic image and the second synthetic image is an integral synthetic image. In a further particular embodiment, the first synthetic image is an integral synthetic image. In yet a further particular embodiment, both the first synthetic image and the second synthetic image are integral synthetic images.

In Figs. 9A and 9B, the appearance of a cell 16 indicates that at least the first synthetic image is an integral image.

However, also sets of image objects giving rise to moiré images can be used for creating the composite image objects. In a particular embodiment, at least one of the first synthetic image and the second synthetic image is a moiré image. In a further particular embodiment, the second synthetic image is a moiré image. In yet a further particular embodiment, both the first synthetic image and the second synthetic image are moiré images.

When using a first set 31 of image objects intended to give rise to an integral synthetic image as first synthetic image, the image objects of the first set 31 of image objects are limited to a certain area of cell 16. The second set of image objects can be intended to give rise to a moiré image, and its image objects are therefore not limited by the area of the cell 16 of the first set 31 of image objects. Likewise, if the second set of image objects is intended to give rise to an integral synthetic image but with a different cell size and/or cell geometry, the image objects of the second set of image objects may be controlled to appear in other areas.

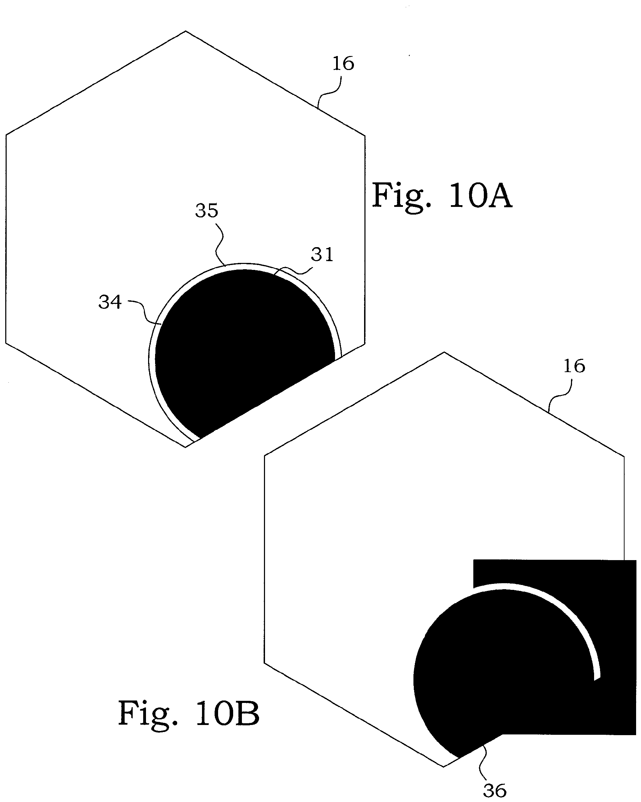

It has been found that since the first synthetic image, if being an integral synthetic image, disappears when the viewing direction moves the projected area over the border of the associated cell, the sensitivity for misinterpretation of different synthetic images more or less vanishes. It is therefore not of interest to add any margin area in such a case, or at least not a too wide margin area. This situation can be illustrated by Figs. 10A-B. In Fig. 10A, a first set 31 of image objects is illustrated within a cell 16. An envelope area 35 is defined, comprising the area of the first set 31 of image objects as well as a margin area 34. It can, however, be noticed that the margin area 34 does not include any parts essentially along the border of the cell 16, but just at the corners of the first set 31 of image objects. When the first set 31 of image objects and the envelope are 35 are conditionally combined with a second set of image objects, a result as illustrated in Fig. 10B may be achieved. The second set of image objects is here a set intended for creating a moiré image and is thus not limited by the cell 16. A margin is created between the two sets within the cell 16, but not at the cell border.

In other words, the first set of image objects 31 are provided within a set of first cells 16, wherein each said first cell 16 is associated with a respective focusing element of the focusing element array. The margin area 34 encloses edges of first images objects not coinciding with borders of the first cells.

The above described combining can be understood as a masking or cutting of the second set of image objects. These principles can be extrapolated also to additional sets of image objects. A first set of image objects and its associated envelope area may thereby mask or cut more than one other set of image objects.

In an alternative view, the second set of image objects may be considered as a combined set of image objects, composed by two or more sets of image objects. Such a composed set of image objects may itself comprise a cutting or masking by use of envelope areas.

In other words, several different part images can be produced, which are provided at different heights/depths and which at certain angles may cover each other in different relations. Margin areas may then be used in the different images to increase the viewability at such covering relationships.

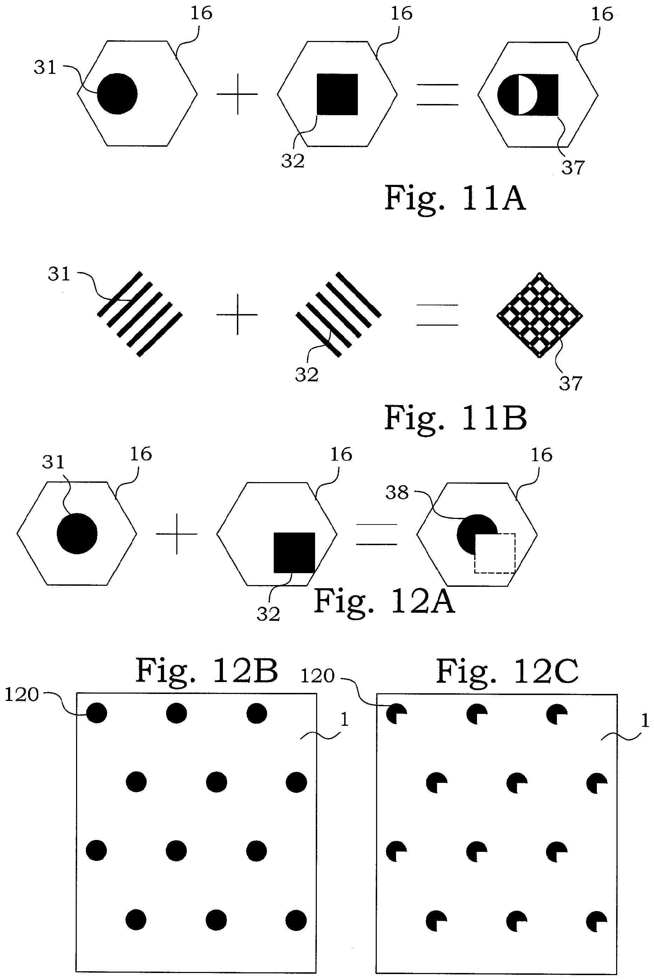

The effects above are achieved by applying logics between different "layers" of image objects. Conditional merging of sets of image objects into composite image objects may also be performed in other ways. Fig. 11A illustrates a cell 16 at the leftmost part of the figure that comprises a first set of image objects 31 in the form of a circular disc. In the cell 16 in the middle of the figure, a second set of image objects 32 has the shape of a square. In the right-hand part of the figure, composite image objects 37 are illustrated which are the results of a conditional merging of the first set of image objects 31 and the second set of image objects 32. In this case, the conditional merging is that the composite image objects are present only in points where either the first set of image objects exists or the second set of image objects exists but not both. In other words, the conditional merging is an exclusive "OR" condition.

The result is that when the first synthetic image and the second synthetic image overlap, both images disappear leaving an "empty" space. Such an optical effect does not directly correspond to a traditional three-dimensional physical behaviour, but gives still information of the existence of overlap regions that is relatively easy to understand and interpret.

Another example of such an exclusive "OR" conditional merging is illustrated in Fig. 11B. Here, a first set of image objects 31, belonging to a moiré image, is combined with a second set of image objects 32, also belonging to a moiré image. The positions where the stripes cross, no image is present. The crossings become in that way easy to detect.

In further other embodiments, exclusive "OR" conditional merging between one set of image objects associated with a moiré image and one set of image objects associated with an integral synthetic image can be used.

Composite image objects associated with different sets of image objects can be configured in many other configurations. One approach is to let an appearance of a first set of image objects be dependent on any existence of a second set of image objects at the same position. Fig. 12A illustrates one embodiment, where in the leftmost part, a cell 16 comprises a first set of image objects 31, in the form of a circular disc. In the cell 16 in the middle of the figure, a second set of image objects 32 has the shape of a square. In the right-hand part of the figure, composite image objects 38 are illustrated which are formed in dependence on the first set of image objects 31 and the second set of image objects 32. A dotted line indicates the position of the second set of image objects 32, as a guide for the present illustration. The composite image objects 38 are a conditional appearance of the first set of image objects 31 dependent on the second set of image objects 32. In this embodiment, the first set of image objects 31 is preserved only in positions where the second set of image objects 32 do not overlap. The composite image objects 38 can also be seen as a conditional merging of at least a first set of image objects 31 and a second set of image objects 31, where the conditional merging is that the composite image objects 38 are present only in points where the first set of image objects 31 exists but the second set of image objects 32 does not exist.

This gives rise to an eclipse-like behaviour. In Fig. 12B, a schematic illustration of how the synthetic-image device 1 may look like from one viewing angle. The first set of image objects 31 and the second set of image objects 32 do not overlap in this viewing direction and a composite synthetic image 120 in the form of full circular discs is seen. Fig. 12C illustrates the same synthetic-image device 1, but now tilted in another angle. The first set of image objects 31 and the second set of image objects 32 do now partially overlap in this viewing direction and a composite synthetic image 120 in the form of three-quarter circular discs is seen.

The second set of image objects 32 does never give rise to any directly perceivable synthetic image 120. However, since the second set of image objects 32 is used as a condition for the appearance of the first synthetic image, parts of the shape of the intended synthetic image associated with the second set of image objects 32 may be seen as the borders of the appearing eclipses.

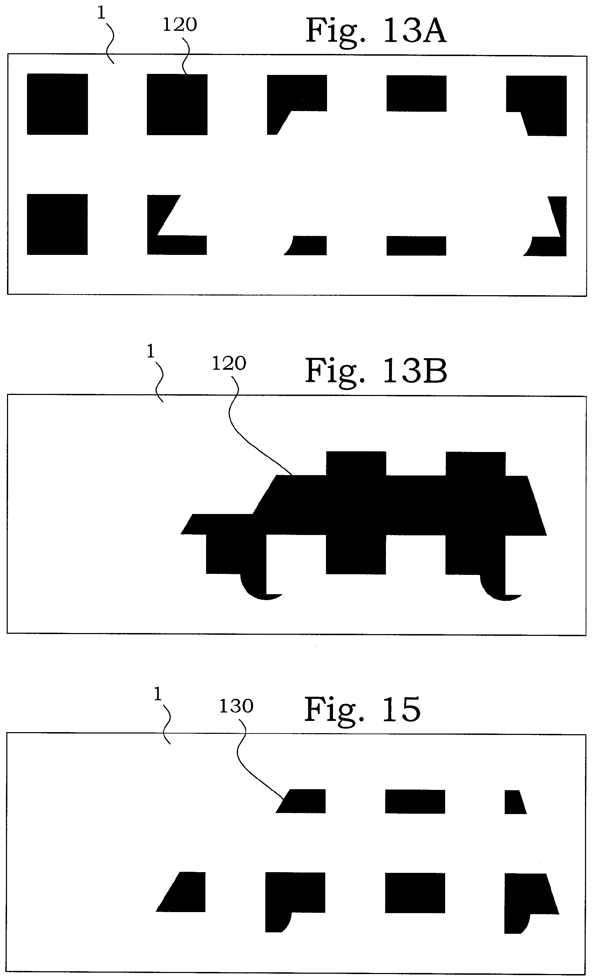

Fig. 13A is a schematic illustration of another synthetic-image device 1. In this case, a first set of image objects 31 is associated with a moiré image of squares.

A second set of image objects 32 is associated with an integral synthetic image of a car. By using the same conditional merging as in Figs12A-C above, a composite synthetic image 120 as illustrated in Fig. 13A is achieved. The repetitive pattern of the squares is shown except for the positions where the integral synthetic image of the car would have been seen. Despite the fact that the integral synthetic image associated with the second set of image objects 32 never is depicted, the viewer may anyway figure out how the image would have looked like by tilting the synthetic-image device 1 in different directions.

Fig. 13B is a schematic illustration of another synthetic-image device 1. Here, the first and second sets of image objects from Fig. 13A have been exchanged. The appearance of the integral synthetic image of the car is conditioned depending on the non-existence of the moiré image of squares. In other words, here one set of image objects gives a field-of-view control for another set of image objects.

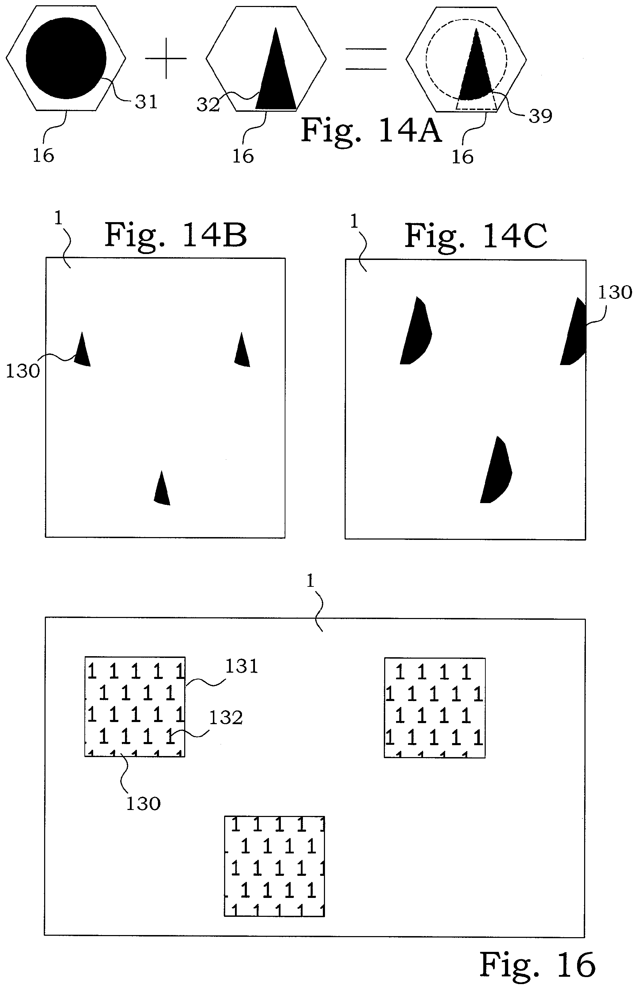

Also other conditional rules can be applied. Fig. 14A illustrates one embodiment, where in the leftmost part, a cell 16 comprises a first set of image objects 31, in the form of a circular disc. In the cell 16 in the middle of the figure, a second set of image objects 32 has the shape of a triangle. In the right-hand part of the figure, composite image objects 39 are illustrated which are formed in dependence on the first set of image objects 31 and the second set of image objects 32. A dotted line indicates the positions of the first and second sets of image objects 31, 32, as a guide for the present illustration. The composite image objects 39 are a conditional appearance of the first set of image objects 31 dependent on the second set of image objects 32. In this embodiment, the first set of image objects 31 is preserved only in positions where the second set of image objects 32 overlaps. The composite image objects 39 can also be seen as a conditional merging of at least a first set of image objects 31 and a second set of image objects 31, where the conditional merging is that the composite image objects 39 are present only in points where both the first set of image objects 31 and the second set of image objects 32 exist.

This gives rise to a developer-like behaviour. In Fig. 14B, a schematic illustration of how the synthetic-image device 1 may look like from one viewing angle. The first set of image objects 31 and the second set of image objects 32 overlap in this viewing direction at the upper part of the triangle and a composite synthetic image 130 in the form of a triangle top is seen. Fig. 12C illustrates the same synthetic-image device 1, but now tilted in another angle. The first set of image objects 31 and the second set of image objects 32 do now partially overlap with other parts in this viewing direction and a composite synthetic image 130 in the form of a triangle cut by circular border is seen.

The first set of image objects 31 does never give rise to any directly perceivable synthetic image 120 if not overlapping with the second set of image objects 32. Likewise, the second set of image objects 32 does never give rise to any directly perceivable synthetic image 120 if not overlapping with the first set of image objects 31. One of the sets of image objects is thus needed to "develop" the other set of image objects.

Fig. 15 is a schematic illustration of another synthetic-image device 1 based on the same first set of image objects and second set of image objects as in Figs. 13A-B. However, here conditional merging as in Figs. 14A-C above is used for producing a composite synthetic image 130.

In one embodiment, a synthetic-image device comprises an image layer and a focusing element array. The image layer is arranged in a vicinity of a focal distance of focusing elements of the focusing element array. The image layer comprises composite image objects. The composite image objects of the image layer array are a conditional appearance of a first set of image objects dependent on a second set of image objects. The first set of image objects gives rise to a first synthetic image at a non-zero height or depth when being placed in a vicinity of a focal distance of focusing elements and viewed through the focusing element array. Likewise, the second set of image objects gives rise to a second synthetic image at a non-zero height or depth when being placed in a vicinity of a focal distance of focusing elements and viewed through the focusing element array.

In a particular further embodiment, the composite image objects of the image layer array are a conditional merging of at least the first set of image objects and the second set of image objects. The conditional merging is that the composite image objects are present only in points where the first set of image objects exists but the second set of image objects does not exist and/or the composite image objects are present only in points where both the first set of image objects and the second set of image objects exist.

In a particular further embodiment, the conditional merging is that the composite image objects are present only in points where the first set of image objects exists but the second set of image objects does not exist.

In another particular further embodiment, the conditional merging is that the composite image objects are present only in points where both the first set of image objects and the second set of image objects exist.

In Fig. 16, an example of a synthetic-image device 1 is schematically illustrated, where a conditional merging is based on that the composite image objects are present only in points where both the first set of image objects and the second set of image objects exist. The second set of image objects gives rise to three large squares 131, which are essentially colour-free or transparent. The first set of image objects gives rise to an array 132 of "1". The conditional merging results in that the array 132 of "1" only is visible when coexisting with the squares 131. The optical effect of the synthetic-image device 1 is that the viewer perceives that the array 132 of "1" is seen through a "window" created by the squares 131. In other words, also here one set of image objects gives a field-of-view control for another set of image objects.

In an alternative interpretation of the synthetic-image device 1 of Fig. 16, a conditional merging based on that the composite image objects are present only in points where the first set of image objects exists but the second set of image objects does not exist. The second set of image objects here gives rise to a synthetic image that is interpreted as a covering non-transparent surface with square holes.

The different embodiments and examples of applying logics between different "layers" of image objects can be combined in different configurations. For instance, if three sets of image layers are considered to be combined, a first kind of logics can be applied between two of the layers, whereas a different kind of logics can be applied relative the third image layer. The person skilled in the art realizes that the different embodiments and examples can be combined in any configurations and numbers.

As mentioned above, using one or more integral synthetic images, different kinds of optical effects can be achieved, both effects that resembles optical effects of the three-dimensional physical world and effects that behaves in "strange" manners.

In one embodiment at least one of the first synthetic image and the second synthetic image is a three-dimensional image. This gives the possibility to combine typical three-dimensional view effects with parallax-caused effects.

In a moiré image, the magnification depends on the relation between the periodicity of the focusing elements and the periodicity of the image objects. A small difference gives rise to a high magnification. Thus, when the difference comes extremely close to zero, i.e. when the ratio of periodicities becomes very close to 1, the magnification approaches infinity. This means at the same time that the synthetic image no longer is perceivable by a viewer, since the same optical information is presented by each of the focusing elements. However, such types of synthetic images, of moiré image type or integral synthetic image type, may anyway be useful. By watching or registering the synthetic-image device from a very small distance, the viewing angles becomes slightly different for the different focusing elements, and the "infinite" magnification becomes revoked. This can easily be utilized e.g. for security markings. Such synthetic images may also advantageously be used in combination with the above described composite image object aspects.

In one embodiment, the first set of image objects gives rise to the first synthetic image when viewed through said focusing element array from a distance less than 15 cm and/or the second set of image objects giving rise to the second synthetic image when viewed through the focusing element array from the distance less than 15 cm.

Another design alternative is to create a synthetic image with an infinite magnification in one direction, but a finite magnification in a perpendicular direction. Also such a synthetic image will be un-perceivable when presented for a viewer in a flat form. However, by bending the synthetic-image device around an axis transversal to the axis of the infinite magnification, the relations between the periods of the focusing elements and the periods of the image objects change, giving rise to a finite magnification in both directions. The synthetic image then becomes perceivable.

In one embodiment, the first set of image objects gives rise to the first synthetic image when viewed through a bent focusing element array and/or the second set of image objects giving rise to the second synthetic image when viewed through a bent focusing element array.

This effect can be achieved by moiré images, where the pitch of the repeated image objects is modified. However, integral synthetic images may also be designed to give a similar effect.

The combination of sets of image objects can be developed further by using additional sets of image objects on which composite image objects are dependent. The additional sets of image objects may overlap with the first and/or second sets of image objects, and all sets of image objects may then be involved in the conditional merging in at least some areas of the image layer. The additional sets of image objects may in other alternatives only be provided as non-overlapping with the first and/or second sets of image objects and the conditional merging may then be different for different part areas of the image layer.

In one embodiment, composite image objects of the image layer array is further dependent on at least one additional set of image objects. This additional set of image object gives rise to an additional synthetic image when being placed in a vicinity of a focal distance of focusing elements and viewed through the focusing element array.

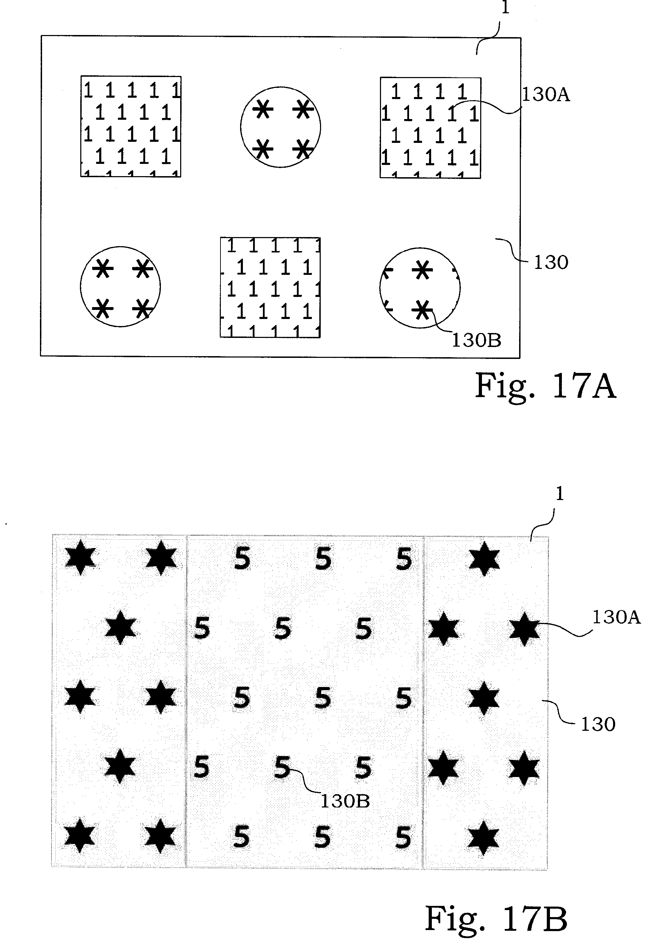

Fig. 17A illustrates a synthetic-image device 1 based on several sets of image objects giving rise to a total composite synthetic image. A first composite synthetic part image 130A resembles the composite synthetic image of Fig. 16. However, the total composite synthetic image 130 also presents a second composite synthetic part image 130B, here illustrated as a star pattern as seen through a circular "window". In this particular example, two sets of image objects cooperate to form the first composite synthetic part image 130A and two other sets of image objects cooperate to form the second composite synthetic part image 130B.

Fig. 17B illustrates another synthetic-image device 1 based on several sets of image objects giving rise to a total composite synthetic image. The two part images 130A and 130B here appear at the same apparent depth and are furthermore aligned to each other. Upon changing the viewing angle, the "windows" defining the different areas will move and the result is a sweeping flip of the stars into "5"'s and vice versa. The patterns used for defining the sweeping areas have a period that is larger than the size of the windows.

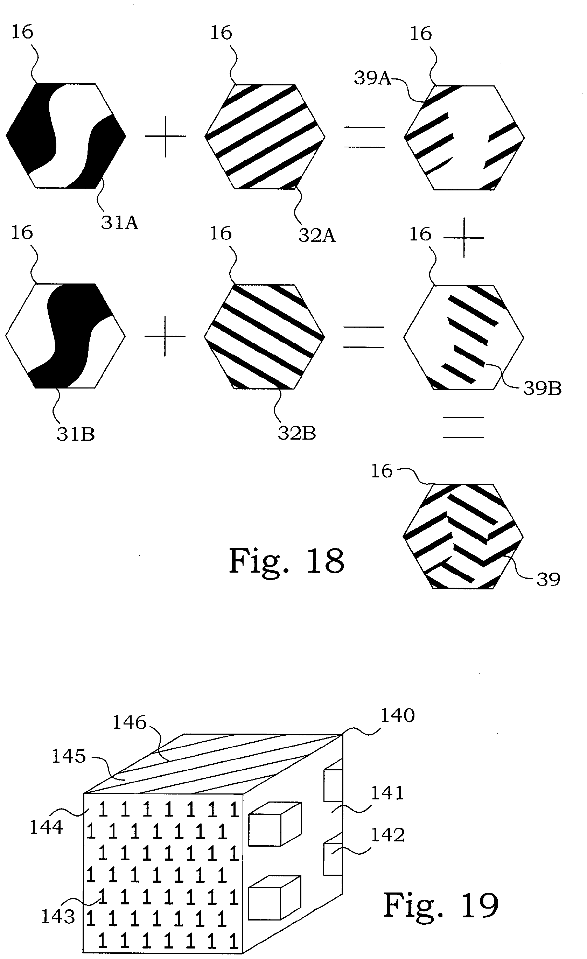

In Fig. 18, an illustration on a cell level is illustrated. In the upper row a first set of image objects 31A is combined with a second set of image objects 32A to form part composite image objects 39A. In the lower row a third set of image objects 31B is combined with a fourth set of image objects 32B to form part composite image objects 39B. At the bottom, the part composite image objects 39A, 39B are combined into a final composite image objects 39.

As anyone skilled in the art understands, combinations of different sets of image objects can be performed in almost unlimited number of variations. It becomes possible to give properties to dynamic surfaces of synthetic images.

Fig. 19 illustrates one more elaborate example of a composite synthetic image 140 in the form of a three-dimensional cube 149. On a first side 141 of the cube 149, a "window" is presented, through which an array 142 of smaller three-dimensional cubes is seen. On a second side 143 of the cube 149, another "window" is presented, through which an array 144 of "1" is seen. On a third side 145 of the cube 149, yet another "window" is presented, through which an array 146 of lines is seen. When shifting the viewing angle, the large three-dimensional cube 149 will be seen from different angles and the sides 141, 143, 145 will consequently shift in position and shape and may even disappear totally. The arrays 142, 144, 146 being seen through the different sides 141, 143, 145 will also follow in new view of the large three-dimensional cube 149 and be adapted to the new position and shape of the respective side 141, 143, 145.

When producing synthetic image devices according the above described ideas, the actual combination of the different sets of image objects is preferable made before the image layer is created. In other words, instead of modifying physical sets of image objects, numerical representations of the sets of image objects are instead created. In the case an envelope area is used for creating the composite image objects, also this is expressed by a numerical representation. The combination into a composite image object is then performed on these numerical representations. When a numerical representation of final composite image objects is achieved, the image layer is created according to that numerical representation. The transfer of the numerical representation into a physical image layer is performed according to well-known manufacturing principles, using e.g. different kinds of printing or embossing.

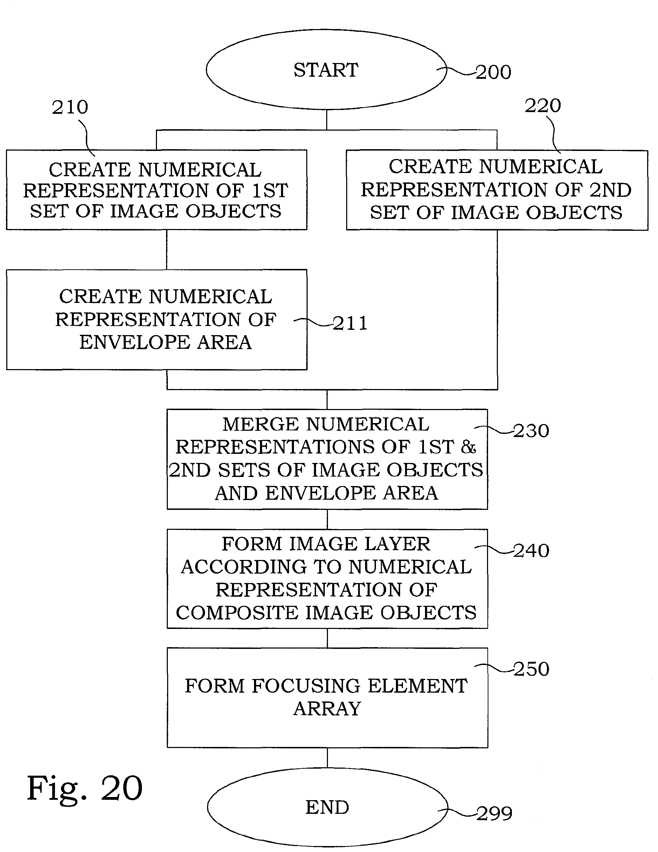

Fig. 20 illustrates a flow diagram of steps of an embodiment of a method for producing a synthetic-image device. The method starts in step 200. In step 210, a numerical representation of a first set of image objects is created. The first set of image objects is arranged for giving rise to at least a first synthetic image at a non-zero height or depth when being placed in a vicinity of a focal distance of focusing elements and viewed through the focusing element array. In step 211, a numerical representation of an envelope area associated with the first set of image objects is created. The envelope area of the first set of image objects is an area covering the first set of image objects and further comprising a margin area not covering the first set of image objects. In step 220, a numerical representation of a second set of image objects is created. The second set of image objects is arranged for giving rise to at least a second synthetic image at a non-zero height or depth when being placed in a vicinity of a focal distance of focusing elements and viewed through the focusing element array. In step 230, the numerical representation of the first set of image objects, the numerical representation of the envelope area associated with the first set of image objects and the numerical representation of the second set of image object are merged according to a predetermined condition into a numerical representation of composite image objects. The conditional merging is that the composite image objects are present only in points where the first set of image objects exists or in points where the second set of image objects exists but the envelope area associated with the first set of image objects does not exist. In step 240 an image layer is formed according to the numerical representation of composite image objects. In step 250 a focusing element array is formed. The image layer is arranged in a vicinity of a focal distance of focusing elements of the focusing element array. The process ends in step 299.

The steps 240 and 250 can be performed in either order or at least partially simultaneously.

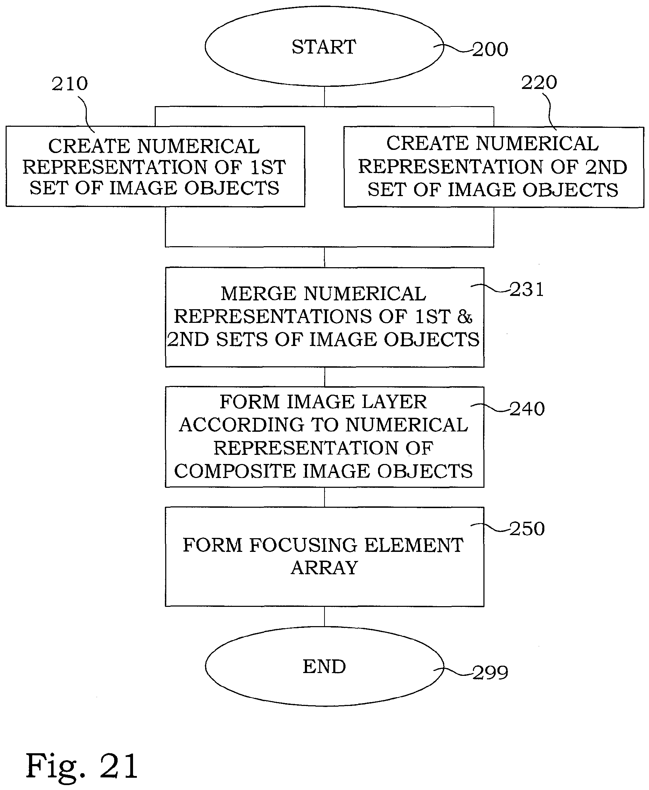

Fig. 21 illustrates a flow diagram of steps of an example of a method for producing a synthetic-image device. The method starts in step 200. In step 210, a numerical representation of a first set of image objects is created. The first set of image objects is arranged for giving rise to at least a first synthetic image at a non-zero height or depth when being placed in a vicinity of a focal distance of focusing elements and viewed through the focusing element array. In step 220, a numerical representation of a second set of image objects is created. The second set of image objects is arranged for giving rise to at least a second synthetic image at a non-zero height or depth when being placed in a vicinity of a focal distance of focusing elements and viewed through the focusing element array. In step 231, the numerical representation of the first set of image objects and the numerical representation of the second set of image object are merged into a numerical representation of composite image objects. The composite image objects of the image layer array are a conditional appearance of the first set of image objects dependent on the second set of image objects. In step 240 an image layer is formed according to the numerical representation of composite image objects. In step 250 a focusing element array is formed. The image layer is arranged in a vicinity of a focal distance of focusing elements of the focusing element array. The process ends in step 299.

The steps 240 and 250 can be performed in either order or at least partially simultaneously.

In the embodiments of methods for producing a synthetic-image device ion the present disclosure, numerical representations of sets of image objects are created. This is, as such, well-known in prior art, and will just be described briefly here below.

In a first approach of numerical representations, the numerical representations of the image objects are vector representations of areas. The objects are described by polygons which can be rendered smoothly at any desired display size. However, the polygons smoothness is generally adjusted to match the resolution of step 240, in order to avoid too large amount of data.

This kind of representations of areas is well-known e.g. in the fields of mechanical design or integrated circuit design.

In another approach, of numerical representations, the numerical representations of the image objects are pixel-based. The total area is then divided into a number of pixels. Each pixel is then defined as either belonging to the image object or belonging to a surrounding. The different logic operations are in such an approach performed essentially pixel by pixel.

Also other types of numerical representations may be used.

In a particular embodiment, the merging 231 is that the composite image objects are present only in points where the first set of image objects exists but the second set of image objects does not exist and/or the composite image objects are present only in points where both the first set of image objects and the second set of image objects exist.

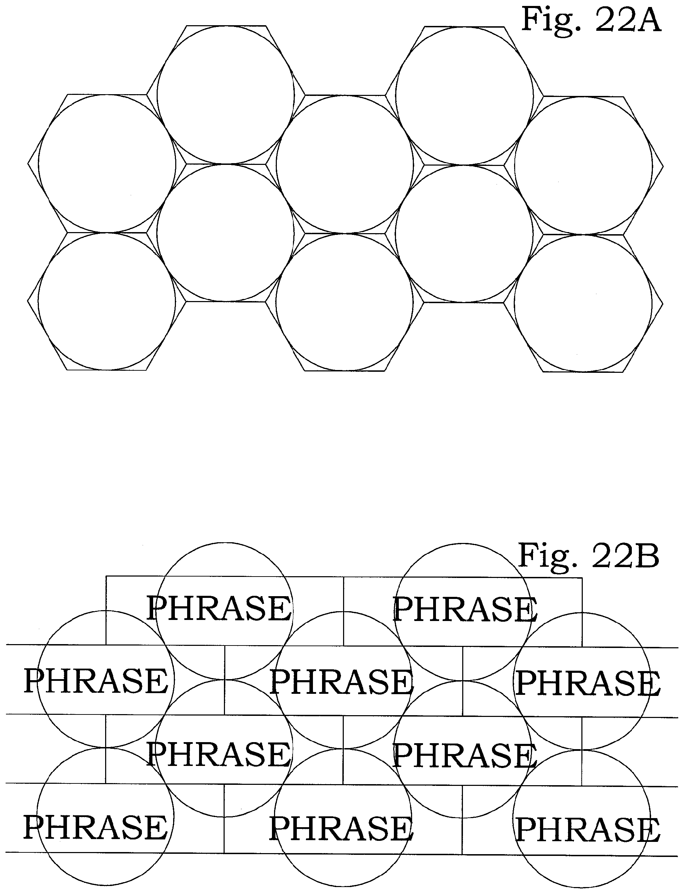

In the examples and embodiments above, cells used for integral synthetic images have been illustrated as regular hexagonal cells. Fig. 22A illustrates such a situation, where a hexagonal cell 16 is associated with each focusing element 22. The maximum area of the cell 16 is equal to the total area divided by the number of focusing elements 22. If the focusing elements 22 have a circular border as in the illustration, the cell 16 may be slightly larger than the actual base area of the focusing element 22.

The cells may also be smaller than the maximum allowed size, e.g. for making image flips less pronounced, as discussed further above. However, the density of the cells 16 equals the density of focusing element 22. In other words, each cell 16 can be associated to a unique focusing element 22.

However, other configurations of cells are also possible and, depending on the application, may even be preferred. Fig. 22B illustrates one example, where rectangular cells 16 are used together with the hexagonally distributed focusing elements 22. Still, each cell 16 is associated with a focusing element 22. The distribution of the cells 16 is still made in a regular hexagonal pattern, even if the cells 16 themselves are shaped as rectangles. In this example, the area of the cells 16 is equal to the maximum area and the cells 16 thus occupies the entire surface of the image layer.

This shape of the cells 16 may be preferred in different applications. In the illustrated case, the cells 16 comprise image objects 12 creating a phrase "PHRASE" in each cell 16. The length of the phrase is larger than the focusing element diameter and in order not to induce any flip of the integral synthetic image when a viewer tries to read the entire phrase, the dimension of the cell 16 in the direction of the phrase is allowed to be larger than the diameter of the focusing element 22. Instead, the cell 16 is made narrower in a perpendicular direction. This means that the synthetic-image device 1 can be tilted to a larger angle in the horizontal direction, as illustrated, than in the vertical direction, without causing any flip of the integral synthetic image. If the integral synthetic image, as in this case, is a text, flips in the horizontal direction, i.e. the reading direction, is generally more disturbing than a flip in the vertical direction. The selection of the geometry and size of the cell 16 solves such problems.

Another use of extending the cell range may be in connection with lenses with high F numbers. In such applications, the angle necessary for reaching the border of a hexagonal cell is then relatively low, and flips between integral synthetic images therefore occurs more frequently when tilting such devices. However, these effects can be mitigated in one direction by instead extend the cell in that direction. The disadvantage is, however, that the angle range before a flip occurs in a transverse direction becomes smaller.

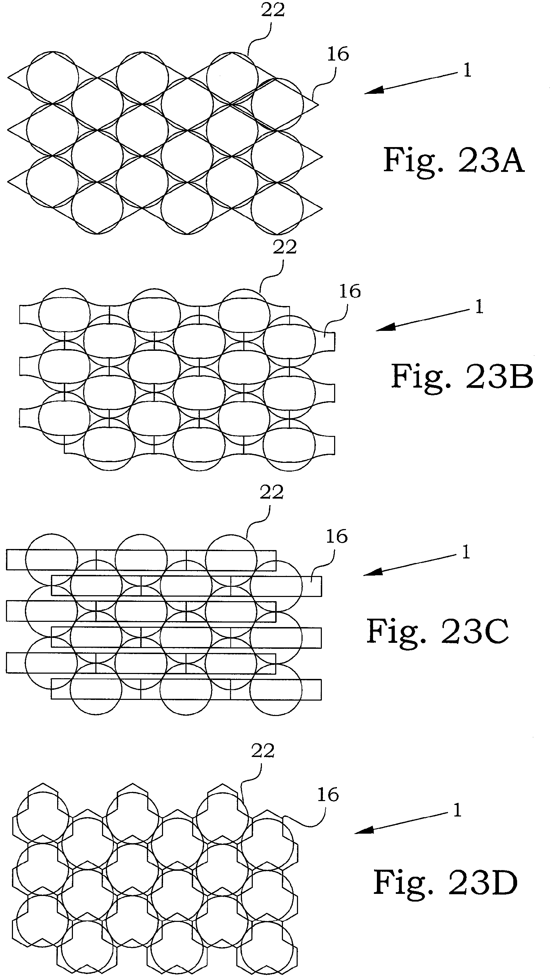

Further examples of cell shapes are illustrated schematically in Figs. 23A-D. In Fig. 23A, a rhombic cell shape is used, also giving a slightly larger tilt angle horizontally before an image flip occurs. The cell shape may also comprise non-linear borders, such as e.g. in Fig. 23B. Here, a somewhat larger horizontal tilt is allowed before a flip, if the horizontal tilt is moderate. By introducing a space between the cells, as in Fig. 23C, the integral synthetic image will first disappear at one tilt angle and only by a further tilting, the "flipped" integral synthetic image will appear. This behaviour is sometime experienced as less disturbing than a direct flip. Fig. 23D illustrates a complex cell shape, which may be useful if dense hexagonal integral synthetic images are to be produced. This will be further discussed below.

In real synthetic-image devices, the focussing elements typically present different kinds of optical aberrations. This means that the focusing that is achieved is not totally perfect. Also some light emanating from areas slightly outside the intended area, for a certain viewing direction, is thereby refracted by the focussing elements in that viewing direction. The result is a diffuse shadowing in the colour of the object to be seen. The shape of this shadowing depends on both the shape of the object intended to be imaged and the shape of the cell, and is in principle some sort of convolution of the shapes.

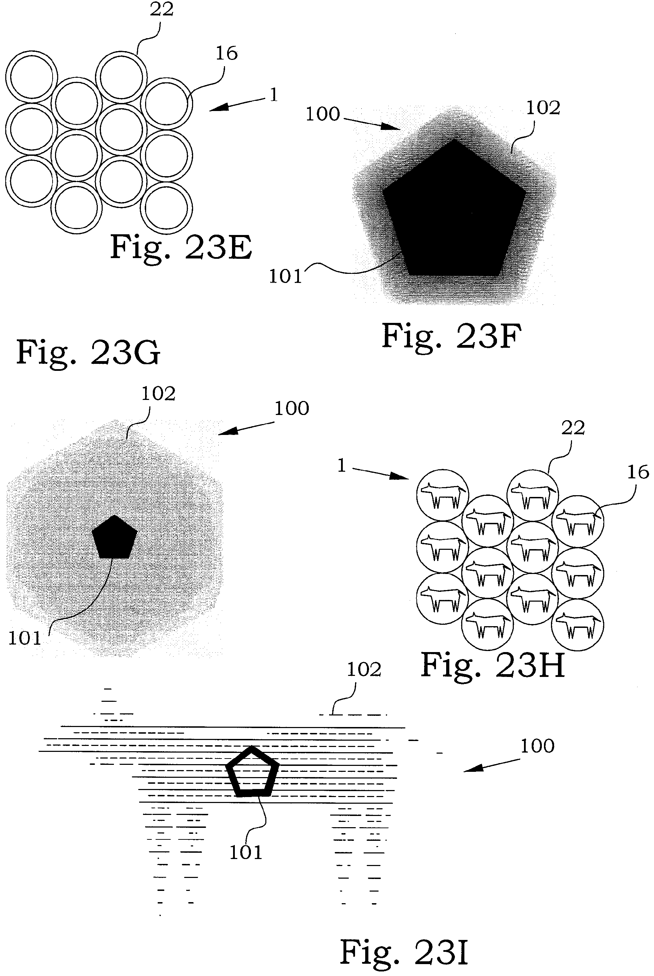

In some applications, the appearance of such a shadow may be disturbing. This may be even more accentuated if the shadow presents distinct geometrical features, e.g. caused by a cell having such distinct geometrical features. In such cases, it is might be wise to select a cell that has a relatively neutral shape. Circular cells 16, such as illustrated in Fig. 23E, or regular polygons with many corners, may be favourable compared to e.g. rectangular cells.

The shadowing effect also depends on the magnification of the synthetic-image device. Fig. 23F illustrates very schematically a synthetic image 100 presenting a pentagon object 101, where a low magnification is used in the synthetic-image device. A diffuse shadow 102 may appear, having geometrical resemblance with the object 101. The cell shape, which here is hexagonal, is playing a minor role in the shadows shape. In Fig. 23G, a similar illustration shows a synthetic image 100 presenting a pentagon object 101, but where a high magnification is used in the synthetic-image device. In this case, the shadow 102 is more distinct and the hexagonal shape of the cell here gives a more distinct limitation of the shadow.

For applications where the shadowing is unwanted, neutral cell shapes as well as lower magnification factors are to prefer.

However, such shadowing effects may also be utilized on purpose. In Fig. 23H, a synthetic-image device 1 is illustrated, having cells 16 in the shape of an animal. By, as illustrated in Fig. 23I, using a high magnification and a relative neutral main object 101, the animal shape can be vaguely distinguished in the shadowing 102 in the synthetic image 100.

In one embodiment, a synthetic-image device comprises a focusing element array and an image layer. The focusing element array is a two-dimensional periodic array having a geometrical symmetry. The image layer is arranged in a vicinity of a focal distance of focusing elements of the focusing element array. The image layer has sets of image objects arranged in cells of a cell array, wherein each cell is associated with a respective one of the focusing elements. The set of image objects is arranged for giving rise to at least a first synthetic image when being placed in a vicinity of a focal distance of the focusing elements and viewed through the focusing element array. Each of the cells has a shape with a geometrical symmetry that is different from the geometrical symmetry of the two-dimensional periodic array.

In a particular embodiment, the area of the cells is less than the area of the focusing element array divided by the number of focusing elements of the focusing element array.

In a particular embodiment, the focusing element array has a hexagonal geometrical symmetry.

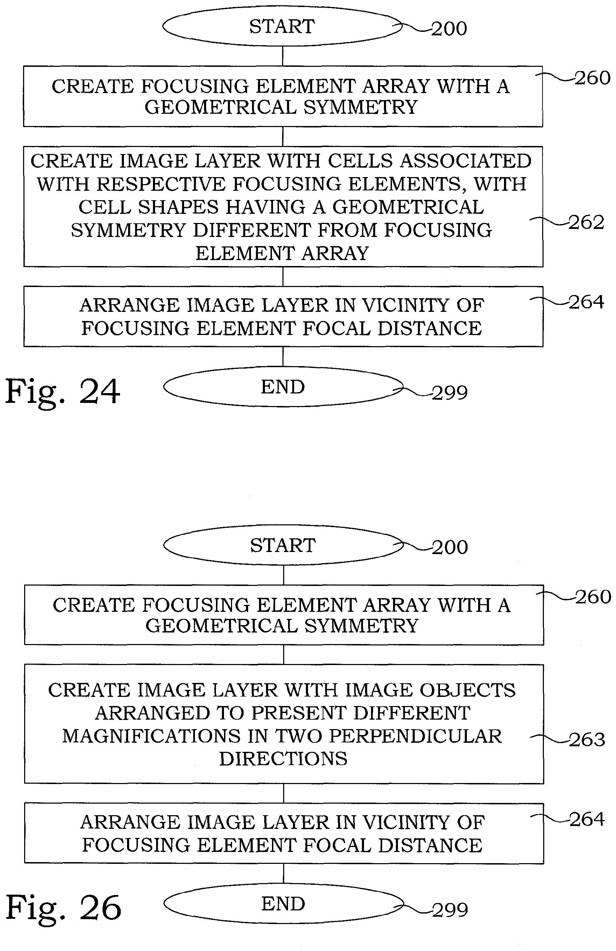

Fig. 24 illustrates a flow diagram of steps of an embodiment of a method for producing a synthetic-image device. The method starts in step 200. In step 260, a focusing element array is created as a two-dimensional periodic array having a geometrical symmetry. In step 262, an image layer is created with sets of image objects arranged in cells of a cell array, wherein each cell is associated with a respective one of the focusing elements. Each of the cells has a shape with a geometrical symmetry that is different from the geometrical symmetry of the two-dimensional periodic array. The set of image objects is arranged for giving rise to at least a first synthetic image when being placed in a vicinity of a focal distance of the focusing elements and viewed through the focusing element array. In step 264, the image layer is arranging in a vicinity of the focal distance of focusing elements of the focusing element array. The procedure ends in step 299.

Despite the flow character of Fig. 24, the steps 260 and 262 can be performed in either order or at least partially simultaneously and/or as a common process. Furthermore, the step 264 can be performed at least partially simultaneously and/or as a common process to steps 260 and/or 262.

In many applications, repetitive patterns are requested. The moiré images are always of this kind, but also integral synthetic images may be designed to give a repetitive pattern. The most common type of focusing element array is a regular hexagonal array. This means that the achieved synthetic image in most cases also presents a regular hexagonal patterns repetition.

When designing integral-image devices, pattern size, magnification, apparent depth/height etc. can be selected according to what is most appropriate for each application. In certain applications based on repetitive patterns, it might even be of interest to provide more than one item associated with each focusing element. This may e.g. be useful if a small apparent image size and a large apparent depth are requested at the same time.

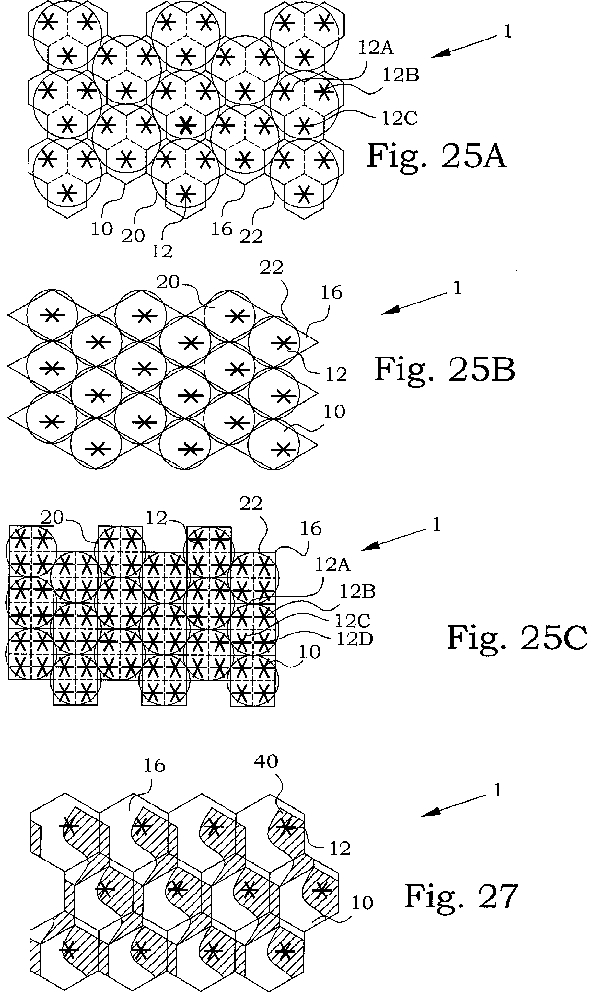

In Figs. 25A-C, some examples of how image array symmetry and the number of items in each cell may be altered to increase to possibilities for selecting appropriate image designs.

In Fig. 25A, a synthetic-image device 1 is schematically illustrated, where three identical part image objects 12A-C, together constituting a set of image objects 12, are provided within the area of each focusing element 22. The correlation between the projected images of the different focusing elements here occurs between one of the part image objects 12A-C and a corresponding part image object in the neighbouring cells. The symmetry of both the focusing element array 10 and the produced synthetic image is of a hexagonal symmetry. However, the main axes are rotated 90° with respect to each other.

It may be noted that if the part image objects 12A-C are perfectly aligned to each other over the entire device, some of the depth feeling may be difficult to achieve. This may be dependent on that the eye becomes confused by competitive image object parts and thereby cannot obtain an apparent depth correctly. However, such artefacts may easily be corrected for by on purpose misalign the part image objects 12A-C a very small distance, typically less than 1% of the cell diameter. The eye will now be assisted in the correct correlation at the same time as the parts of the synthetic image are displaced such a small distance that the misalignment is not perceived.

In Fig. 25B, a synthetic-image device 1 is schematically illustrated, where basically one object per cell 16 constitutes the set of image objects 12. However, here the cells 16 have a rhombic shape. By adapting the image objects 12 in the cells in such a way that the magnification in the horizontal direction, as illustrated, is made to be $\frac{1}{\sqrt{3}}$ times the magnification in the vertical direction, the resulting integral synthetic image will present a repetitive patterns having a square symmetry, with the main axes rotated 45°. It is thus possible to produce a synthetic image having a different symmetry as compared to the symmetry of the focusing element array.

In Fig. 25C, both these aspects are combined. Here, four part image objects 12A-D are positioned in each cell 16. The image objects are further adapted to give different magnifications in different directions. If the magnification in horizontal direction becomes $\frac{2}{\sqrt{3}}$ times the magnification in vertical direction, the so produced integral synthetic image becomes a square regular pattern with the main axis in horizontal and vertical directions, respectively.

In the applications where different magnifications are used in different directions, the icons can be stretched or compressed in one direction to get the right icon shape when applying different magnification horizontally and vertically.

Table 1. Combinations of multiple objects per cell with different horizontal and vertical magnifications to achieve different packings.

| Magnification ratio | 1 | $1/\sqrt{3}$ | $2/\sqrt{3}$ | $\sqrt{3}$ |
|---|---|---|---|---|
| # of objects per cell | | | | |
| 1 | Hexagonal packing | 45° rotated square packing | - | - |
| 2 | Rectangular packing | Square packing | - | - |

(continued)

| # of objects per cell | | | | |
|---|---|---|---|---|
| 3 | 90° rotated hexagonal packing | - | - | 45° rotated square packing |
| 4 | Rectangular packing | Rectangular packing | Square packing | Rectangular packing |
| 6 | Rectangular packing | Rectangular packing | Rectangular packing | Square packing |

Other alternatives are also possible. Table 1 summarizes some different combinations of multiple objects per cell with different horizontal and vertical magnifications to achieve different packings. The magnification ratio is given as the magnification in a direction parallel to a closed-packed direction of the hexagonal focusing element array divided by the magnification in a direction perpendicular to the closed-packed direction of the hexagonal focusing element array.

Similar possibilities of combining multiple objects and packing geometries are of course possible with other geometrical symmetries of the focusing element array, e.g. a square symmetry or a rectangular symmetry.

In one embodiment, a synthetic-image device comprises a focusing element array and an image layer. The focusing element array is a two-dimensional periodic array having a geometrical symmetry. The image layer is arranged in a vicinity of a focal distance of focusing elements of the focusing element array. The image layer has sets of image objects arranged in cells of a cell array, wherein each cell is associated with a respective one of the focusing elements. The set of image objects is arranged for giving rise to at least a first synthetic image when being placed in a vicinity of a focal distance of the focusing elements and viewed through the focusing element array. The image objects being arranged to present different magnifications in two perpendicular directions within the plane of the synthetic-image device.

In a particular embodiment, each of the cells has a shape with a geometrical symmetry that is different from the geometrical symmetry of the two-dimensional periodic array.

In a particular embodiment, the image objects of each cell comprises at least two displaced copies of a set of image objects.

In a particular embodiment, the focusing element array has a hexagonal geometrical symmetry.

Fig. 26 illustrates a flow diagram of steps of an embodiment of a method for producing a synthetic-image device. The method starts in step 200. In step 260, a focusing element array is created as a two-dimensional periodic array having a geometrical symmetry. In step 263, an image layer is created with sets of image objects arranged in cells of a cell array, wherein each cell is associated with a respective one of the focusing elements. The image objects being arranged to present different magnifications in two perpendicular directions within the plane of the synthetic-image device. The set of image objects is arranged for giving rise to at least a first synthetic image when being placed in a vicinity of a focal distance of the focusing elements and viewed through the focusing element array. In step 264, the image layer is arranging in a vicinity of the focal distance of focusing elements of the focusing element array. The procedure ends in step 299.

Despite the flow character of Fig. 26, the steps 260 and 263 can be performed in either order or at least partially simultaneously and/or as a common process. Furthermore, the step 264 can be performed at least partially simultaneously and/or as a common process to steps 260 and/or 263.

Fig. 27 illustrates a synthetic-image device 1 combining other optical effects. In these cells 16 a set of image objects 12 is provided, giving a normal synthetic image. Additionally, the cells 16 have areas 40 that are coloured with a partially transparent colour. The areas 40 are provided with the same period as the focusing element array. The areas are thus not giving rise to any perceivable image, but will instead change the background colour, when the focusing areas of the focusing elements in certain directions of view will move into the coloured areas 40.

In one embodiment, a synthetic-image device comprises a focusing element array and an image layer. The image layer is arranged in a vicinity of a focal distance of focusing elements of the focusing element array. The image layer comprises composite image objects. The composite image objects of the image layer array are a conditional appearance of a first set of image objects dependent on a second set of image objects. The first set of image objects gives rise to a first synthetic image at a non-zero height or depth when being placed in a vicinity of a focal distance of focusing elements and viewed through the focusing element array. The second set of image objects is arranged at a same periodicity as the focusing elements of the focusing element array.

The different configurations of cells and image objects as presented above can be applied as such in synthetic-image devices. However, the different configurations can also by advantage be combined with e.g. the application of logics between different "layers" of image objects. The different aspects can thereby be combined depending on the nature of the synthetic image that is intended to be presented.

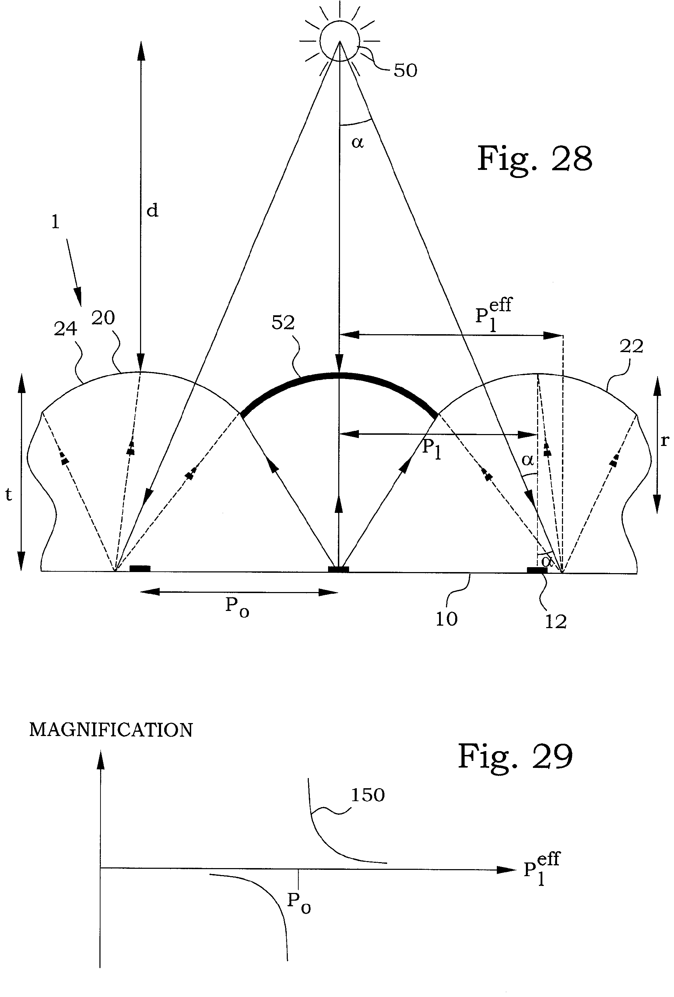

As mentioned further above, viewing a synthetic-image device from a close distance may change the perceived image. It is also possible to achieve a related effect by instead providing a light source positioned at a very short distance from the synthetic-image device. Fig. 28 illustrates schematically such a situation. A focusing element array 20 of the synthetic-image device 1 comprises focusing elements 22, here spherical lenses 24, positioned with a periodicity of Pl and a radius of r. In this synthetic-image device 1, the set of image objects 12 is positioned at the image layer 10 with a periodicity of Po. For simplicity of illustration, the image objects 12 are in this case positioned straight below each focusing element 22. The synthetic-image device 1 has a thickness of t. In this synthetic-image device 1, the periodicity of Po and the periodicity of Pl are equal. This means that a synthetic image produced by this synthetic-image device 1 has an infinite magnification and a viewer will therefore only experience a diffuse device surface.

A point light source 50, or at least a light source emitting essentially diverging rays, is then placed on a distance d from a synthetic-image device 1. Note that some dimensions in the figure are extremely exaggerated in order to better visualize the optical effects. The light impinging at a right angle on the synthetic-image device 1, as illustrated in the middle of the figure, is refracted into one focus spot positioned at the image object 12. That spot on the image object 12 therefore becomes intensively illuminated. Light emitted from this spot will be emitted in all directions. A main part of that re-emitted light will reach the lenses 24 at the lens straight above the emitting spot. Some of this light will be scattered and the lens surface 52 will be experienced as having the same colour as the image object 12.

When considering lenses 24 that are not situated directly beneath the point light source 50, the impinging angle $\alpha$ is different. This means that the spot at which the light is focused will be displaced somewhat sideward. This is seen at the lenses at the sides of the figure. The focus spot here is positioned outside the image object 12 and no, or at least much less, light will be re-emitted. Consequently, the surface of the associated lens is not experienced as coloured.

The total effect will be that a synthetic image will be experienced by a viewer. This synthetic image corresponds essentially to a synthetic image created by an image layer having the image object periodicity of Po, but with a lens array with a larger efficient periodicity Pleff. By simple geometrical considerations, it can be concluded that the efficient lens periodicity becomes:

$$P_l^{eff} = P_l \cdot \frac{t+d}{r+d}. \qquad (3)$$

From this, it can be concluded that the effect will only be noticeable when the distance between the light source and the synthetic-image device is not too large compared to the lens radius and device thickness.

For typical dimensions of lens radii in common types of synthetic-image devices the distance between the light source emitting divergent rays and the surface of the synthetic-image devices is preferably less than 10 cm, more preferably less than 5 cm and most preferably less than 3 cm.

As a non-exclusive example to illustrate the order of magnitudes of the changes in effective lens periods; assume a 70 $\mu$m thick synthetic-image device having a lens radius of 45 $\mu$m. By placing a point light source at a distance of 5 cm from the surface, would give an efficient lens period that is 0.05% larger than the physical one. If the image object period and the physical lens period are the same, such a change in efficient lens period would give rise to a magnified image with a magnification of 2 000. An image object of a real size of 10 $\mu$m would thus appear as a synthetic image of a size of 20 mm. The impression that the image is provided at a certain depth is however, not present.

It should be noted that some of the re-emitted light from the image objects 12 that are hit by the focus points also are spread to the neighbouring lenses, which means that lenses that covers focus spots that do not re-emit any light anyway may be slightly illuminated by its neighbours. However, this effect is rapidly reduced with increasing angle. The overall result is that the experienced synthetic image will be slightly blurred.

In the examples above, a synthetic-image device based on lenses has been discussed. However, corresponding behaviour is also present in e.g. synthetic-image device based on concave mirrors.

The irradiating described above is performed from the front side of the synthetic-image device, i.e. from the side where a synthetic image is supposed to be seen.

Fig. 29 is a diagram that schematically illustrates the magnification 150 as a function of the efficient lens periodicity Pleff. In the case described above, the true lens periodicity Pl was selected to be equal to the image object periodicity Po. This lead to the effect that the infinite magnification without irradiation by the point light source was changed to a finite magnification when the point light source was brought close to the device.

However, by selecting other relations between Pl and Po, other effects can be achieved. By having a Pl just slightly larger than Po will give a synthetic image having a large magnification. By irradiating the synthetic-image device by a point light source from a short distance, an additional synthetic image, congruent with the original one, will appear without depth and with a smaller magnification. By instead having Pl just slightly smaller than Po will give a synthetic image having a large magnification but with an apparent height above the surface of the device. By irradiating the synthetic-image device by a point light source from a short distance, an additional synthetic image, congruent with the original one, will, when the distance is short enough, appear without depth and with a mirror magnification.

This effect can be utilized as an authentication or safety marking. One embodiment of a method for authentication of a synthetic-image device and thereby an item on which synthetic-image device may be attached can be described by the following. The synthetic-image device comprises a focusing element array and an image layer. The image layer is arranged in a vicinity of a focal distance of focusing elements of the focusing element array. The image layer comprises image objects. The method comprises illumination of the synthetic-image device by a light source emitting divergent rays, e.g. a point light source. The illumination is performed from a short distance. The short distance is preferably less than 10 cm, more preferably less than 5 cm and most preferably less than 3 cm. During that illumination, any appearance of a synthetic image not being present without the illumination, is observed as sign of authenticity.

In one further embodiment, the image objects are arranged not to give any perceivable synthetic image when not being illuminated by the point light source. The image objects are thus arranged to give an apparent infinite magnification.

In another further embodiment, the image objects are arranged to give a perceivable synthetic image also when not being illuminated by the point light source. When the point light source is caused to illuminate the synthetic-image device, another copy of that synthetic image appears.

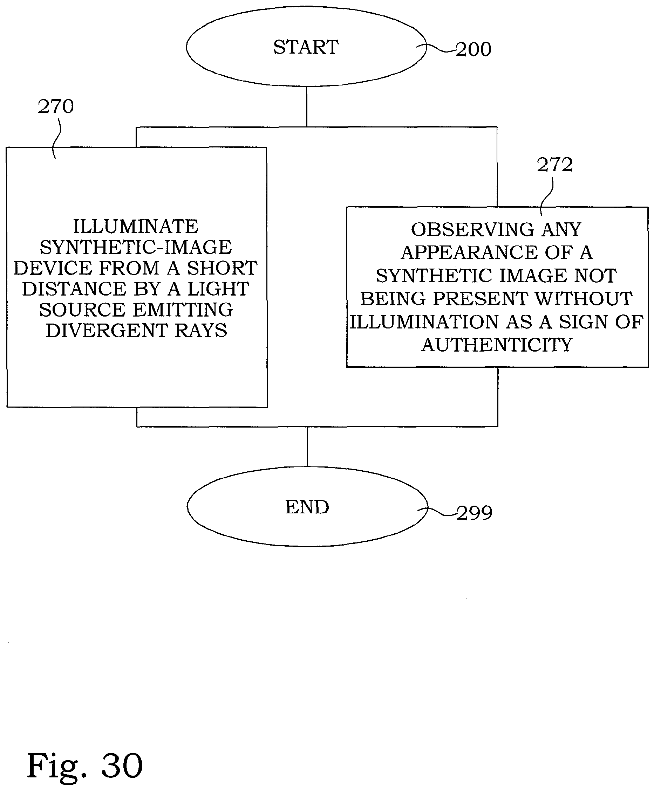

Fig. 30 illustrates a flow diagram of steps of an embodiment of a method for authentication of a synthetic-image device. The method starts in step 200. In step 270, a synthetic-image device is illuminated by a light source emitting divergent rays. The synthetic-image device comprises a focusing element array and an image layer. The image layer is arranged in a vicinity of a focal distance of focusing elements of the focusing element array. The image layer comprises image objects. The illumination is performed from a short distance. The short distance is preferably less than 10 cm. In step 272, occurring during the illumination of step 270, any appearance of a synthetic image not being present without the illumination, is observed as sign of authenticity. The procedure ends in step 299.

The examples of Figs. 22-30 can be utilized in single synthetic image applications. However, these configurations can also be utilized as at least one of the first and second synthetic images as mentioned in connection with Figs. 9-21.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1.　A synthetic-image device (1), comprising

an image layer (10); and
a focusing element array (20);
said image layer (10) being arranged in a vicinity of a focal distance of focusing elements (22) of said focusing element array (20);
wherein composite image objects (36) of said image layer (10) being a conditional merging of at least a first set (31) of image objects (12), an envelope area (35) associated with said first set (31) of image objects (12) and a second set (32) of image objects (12);
said first set (31) of image objects (12) being arranged for giving rise to at least a first synthetic image at a non-zero height or depth when being placed in a vicinity of a focal distance of focusing elements (22) and viewed through said focusing element array (20) and said second set (32) of image objects (12) being arranged for giving rise to at least a second synthetic image at a non-zero height or depth when being placed in a vicinity of a focal distance of focusing elements (22) and viewed through said focusing element array (20), wherein said first synthetic image and said second synthetic image are provided at different heights/depths and at certain viewing angles cover each other;
said envelope area (35) of said first set (31) of image objects (12) being an area covering said first set (32) of image objects (12) and further comprising a margin area (34; 34B) not covering said first set (31) of image objects (12);
said conditional merging being that said composite image objects (36) are present only in points where said first set (31) of image objects (12) exists or in points where said second set (32) of image objects (12) exists but said envelope area (35) associated with said first set (31) of image objects (12) does not exist.

2.　The synthetic-image device according to claim 1, **characterized in that** said envelope area (35) has a main shape that is congruent with an envelope of said image objects (12) of said first set (31) of image objects (12).

3.　The synthetic-image device according to claim 1 or 2, **characterized in that** at least one of said first synthetic image and said second synthetic image is an integral synthetic image.

4.　The synthetic-image device according to claim 3, **characterized in that** said first synthetic image is an integral synthetic image.

5. The synthetic-image device according to any of the claims 1 to 4, **characterized in that** at least one of said first synthetic image and said second synthetic image is a three-dimensional image.

6. The synthetic-image device according to any of the claims 1 to 5, **characterized in that**

   said first set (31) of image objects (12) are provided within a set of first cells (16), wherein each said first cell (16) is associated with a respective focusing element (22) of said focusing element array (20); and
   said margin area (35) encloses edges of first set (31) of image objects (12) not coinciding with borders of said first cells (16).

7. The synthetic-image device according to claim 6, **characterized in that** an average width of objects of said margin area (34) is within the range of 0.1% to 10% of a diameter of said focusing elements (22).

8. The synthetic-image device according to any of the claims 1 to 7, **characterized in that** at least one of said first set (31) of image objects (12) giving rise to said first synthetic image when viewed through said focusing element array (20) from a distance less than 15 cm and said second set (32) of image objects (12) giving rise to said second synthetic image when viewed through said focusing element array (20) from said distance less than 15 cm.

9. The synthetic-image device according to any of the claims 1 to 8, **characterized in that** at least one of said first set (31) of image objects (12) giving rise to said first synthetic image when viewed through a bent said focusing element array (20) and said second set (32) of image objects (12) giving rise to said second synthetic image when viewed through a bent said focusing element array (20).

10. The synthetic-image device according to any of the claims 1 to 9, **characterized in that**

    wherein composite image objects (36) of said image layer (10) is further dependent on at least one additional set (31B, 32B) of image objects (12);
    said additional set (31B, 32B) of image objects (12) giving rise to an additional synthetic image when being placed in a vicinity of a focal distance of focusing elements (22) and viewed through said focusing element array (20).

11. A method for producing a synthetic-image device, comprising the steps of:

    - creating (210) a numerical representation of a first set of image objects being arranged for giving rise to at least a first synthetic image at a non-zero height or depth when being placed in a vicinity of a focal distance of focusing elements and viewed through said focusing element array;
    - creating (211) a numerical representation of an envelope area associated with said first set of image objects;
    - creating (220) a numerical representation of a second set of image objects being arranged for giving rise to at least a second synthetic image at a non-zero height or depth when being placed in a vicinity of a focal distance of focusing elements and viewed through said focusing element array;
    said envelope area of said first set of image objects being an area covering said first set of image objects and further comprising a margin area not covering said first set of image objects;

    - merging (230) said numerical representation of said first set of image objects, said numerical representation of said envelope area associated with said first set of image objects and said numerical representation of said second set of image object according to a predetermined condition into a numerical representation of composite image objects;

    said conditional merging being that said composite image objects are present only in points where said first set of image objects exists or in points where said second set of image objects exists but said envelope area associated with said first set of image objects does not exist;

    - forming (240) an image layer according to said numerical representation of composite image objects; and
    - forming (250) a focusing element array;

    said image layer being arranged in a vicinity of a focal distance of focusing elements of said focusing element array.

**Patentansprüche**

1.  Synthetische Bildvorrichtung (1), umfassend

    eine Bildschicht (10); und
    eine Anordnung (20) von fokussierenden Elementen;
    wobei die Bildschicht (10) in der Nähe einer Brennweite der fokussierenden Elemente (22) der Anordnung (20) von fokussierenden Elementen angeordnet ist;
    wobei zusammengesetzte Bildobjekte (36) der Bildschicht (10) eine bedingte Zusammenfügung mindestens eines ersten Satzes (31) von Bildobjekten (12), eines Umhüllungsbereichs (35), der dem ersten Satz (31) von Bildobjekten (12) zugeordnet ist, und eines zweiten Satzes (32) von Bildobjekten (12) ist;
    wobei der erste Satz (31) von Bildobjekten (12) angeordnet ist, um mindestens ein erstes synthetische Bild auf einer Höhe oder Tiefe ungleich Null hervorzubringen, wenn er in der Nähe einer Brennweite von fokussierenden Elementen (22) platziert wird und durch die Anordnung (20) von fokussierenden Elementen hindurch gesehen wird, und wobei der zweite Satz (32) von Bildobjekten (12) angeordnet ist, um mindestens ein zweites synthetisches Bild auf einer Höhe oder Tiefe ungleich Null hervorzubringen, wenn er in der Nähe einer Brennweite von fokussierenden Elementen (22) platziert wird und durch die Anordnung (20) von fokussierenden Elementen hindurch gesehen wird, wobei das erste synthetische Bild und das zweite synthetische Bild auf verschiedenen Höhen/Tiefen bereitgestellt werden und sich in gewissen Blickwinkeln verdecken;
    wobei der Umhüllungsbereich (35) des ersten Satzes (31) von Bildobjekten (12) ein Bereich ist, der den ersten Satz (32) von Bildobjekten (12) verdeckt und ferner einen Randbereich (34; 34B) umfasst, der den ersten Satz (31) von Bildobjekten (12) nicht verdeckt;
    wobei die bedingte Zusammenfügung darin besteht, dass die zusammengesetzten Bildobjekte (36) nur in Punkten, in denen der erste Satz (31) von Bildobjekten (12) existiert, oder in Punkten, in denen der zweite Satz (32) von Bildobjekten (12) existiert, aber der Umhüllungsbereich (35), der dem ersten Satz (31) von Bildobjekten (12) zugeordnet ist, nicht existiert, vorhanden sind.

2.  Synthetische Bildvorrichtung nach Anspruch 1, **dadurch gekennzeichnet, dass** der Umhüllungsbereich (35) eine Hauptform aufweist, die mit einer Umhüllung der Bildobjekte (12) des ersten Satzes (31) von Bildobjekten (12) deckungsgleich ist.

3.  Synthetische Bildvorrichtung nach Anspruch 1 oder 2, **dadurch gekennzeichnet, dass** mindestens eines von dem ersten synthetischen Bild und dem zweiten synthetischen Bild ein integrales synthetisches Bild ist.

4.  Synthetische Bildvorrichtung nach Anspruch 3, **dadurch gekennzeichnet, dass** das erste synthetische Bild ein integrales synthetisches Bild ist.

5.  Synthetische Bildvorrichtung nach einem der Ansprüche 1 bis 4, **dadurch gekennzeichnet, dass** mindestens eines von dem ersten synthetischen Bild und dem zweiten synthetischen Bild ein dreidimensionales Bild ist.

6.  Synthetische Bildvorrichtung nach einem der Ansprüche 1 bis 5, **dadurch gekennzeichnet, dass**

    der erste Satz (31) von Bildobjekten (12) in einem Satz von ersten Zellen (16) bereitgestellt wird, wobei jede erste Zelle (16) einem jeweiligen fokussierenden Element (22) der Anordnung (20) von fokussierenden Elementen zugeordnet ist; und
    der Randbereich (35) die Kanten des ersten Satzes (31) von Bildobjekten (12) einschließt, die nicht mit den Grenzen der ersten Zellen (16) zusammenfallen.

7.  Synthetische Bildvorrichtung nach Anspruch 6, **dadurch gekennzeichnet, dass** eine mittlere Breite der Objekte des Randbereichs (34) in dem Bereich von 0,1 % bis 10 % eines Durchmessers der fokussierenden Elemente (22) liegt.

8.  Synthetische Bildvorrichtung nach einem der Ansprüche 1 bis 7, **dadurch gekennzeichnet, dass** mindestens einer von dem ersten Satz (31) von Bildobjekten (12) das erste synthetische Bild hervorbringt, wenn er durch die Anordnung (20) von fokussierenden Elementen hindurch aus einer Entfernung von weniger als 15 cm gesehen wird, und von dem zweiten Satz (32) von Bildobjekten (12) das zweite synthetische Bild hervorbringt, wenn er durch die Anordnung (20) von fokussierenden Elementen hindurch aus der Entfernung von weniger als 15 cm gesehen wird.

9. Synthetische Bildvorrichtung nach einem der Ansprüche 1 bis 8, **dadurch gekennzeichnet, dass** mindestens einer von dem ersten Satz (31) von Bildobjekten (12) das erste synthetische Bild hervorbringt, wenn er durch die gebogene Anordnung (20) von fokussierenden Elementen hindurch gesehen wird, und von dem zweiten Satz (32) von Bildobjekten (12) das zweite synthetische Bild hervorbringt, wenn er durch die gebogene Anordnung (20) von fokussierenden Elementen hindurch gesehen wird.

10. Synthetische Bildvorrichtung nach einem der Ansprüche 1 bis 9, **dadurch gekennzeichnet, dass**

die zusammengesetzten Bildobjekte (36) der Bildschicht (10) ferner von mindestens einem zusätzlichen Satz (31B, 32B) der Bildobjekte (12) abhängig sind;
der zusätzliche Satz (31B, 32B) von Bildobjekten (12) ein zusätzliches synthetisches Bild hervorbringt, wenn er in der Nähe einer Brennweite von fokussierenden Elementen (22) platziert wird und durch die Anordnung (20) von fokussierenden Elementen gesehen wird.

11. Verfahren zum Herstellen einer synthetischen Bildvorrichtung, umfassend folgende Schritte:

- Erstellen (210) einer numerischen Darstellung eines ersten Satzes von Bildobjekten, die angeordnet sind, um mindestens ein erstes synthetisches Bild auf einer Höhe oder Tiefe ungleich Null hervorzubringen, wenn er in der Nähe einer Brennweite von fokussierenden Elementen platziert wird und durch die Anordnung von fokussierenden Elementen hindurch gesehen wird;
- Erstellen (211) einer numerischen Darstellung eines Umhüllungsbereichs, der dem ersten Satz von Bildobjekten zugeordnet ist;
- Erstellen (220) einer numerischen Darstellung eines zweiten Satzes von Bildobjekten, die angeordnet sind, um mindestens ein zweites synthetisches Bild auf einer Höhe oder Tiefe ungleich Null hervorzubringen, wenn er in der Nähe einer Brennweite der fokussierenden Elemente angeordnet ist und durch die Anordnung von fokussierenden Elementen hindurch gesehen wird;
wobei der Umhüllungsbereich des ersten Satzes von Bildobjekten ein Bereich ist, der den ersten Satz von Bildobjekten verdeckt, und ferner einen Randbereich umfasst, der den ersten Satz von Bildobjekten nicht verdeckt;

- Zusammenfügen (230) der numerischen Darstellung des ersten Satzes von Bildobjekten, der numerischen Darstellung des Umhüllungsbereichs der dem ersten Satz von Bildobjekten zugeordnet ist, und der numerischen Darstellung des zweiten Satzes von Bildobjekten gemäß einer vorbestimmten Bedingung zu einer numerischen Darstellung von zusammengesetzten Bildobjekten;

wobei das bedingte Zusammenfügen darin besteht, dass die zusammengesetzten Bildobjekte nur in Punkten, in denen der erste Satz von Bildobjekten existiert, oder in Punkten, in denen der zweite Satz von Bildobjekten existiert, aber der Umhüllungsbereich, der dem ersten Satz von Bildobjekten zugeordnet ist, nicht existiert, vorhanden sind,

- Bilden (240) einer Bildschicht gemäß der numerischen Darstellung von zusammengesetzten Bildobjekten; und
- Bilden (250) einer Anordnung von fokussierenden Elementen;

wobei die Bildschicht in der Nähe einer Brennweite der fokussierenden Elemente der Anordnung von fokussierenden Elementen angeordnet ist.

**Revendications**

1. Dispositif d'image synthétique (1), comprenant

une couche d'image (10) ; et
un réseau d'éléments de mise au point (20) ;

ladite couche d'image (10) étant agencée à proximité d'une distance focale d'éléments de mise au point (22) dudit réseau d'éléments de mise au point (20) ;

dans lequel des objets d'image composites (36) de ladite couche d'image (10) sont une fusion conditionnelle d'au moins un premier ensemble (31) d'objets d'image (12), une zone d'enveloppe (35) associée audit premier ensemble (31) d'objets d'image (12) et un deuxième ensemble (32) d'objets d'image (12) ;

ledit premier ensemble (31) d'objets d'image (12) étant agencé pour engendrer au moins une première image synthétique à une hauteur ou profondeur non nulle lorsqu'il est placé à proximité d'une distance focale d'éléments de mise au point (22) et visualisé à travers ledit réseau d'éléments de mise au point (20) et ledit deuxième ensemble (32) d'objets d'image (12) étant agencé pour engendrer au moins une deuxième image synthétique à une hauteur ou profondeur non nulle lorsqu'il est placé à proximité d'une distance focale d'éléments de mise au point (22) et visualisé à travers ledit réseau d'éléments de mise au point (20), dans lequel ladite première image synthétique et ladite deuxième image synthétique sont fournies à différentes hauteurs/profondeurs et, à certains angles de vision, elles se chevauchent ;

ladite zone d'enveloppe (35) dudit premier ensemble (31) d'objets d'image (12) étant une zone recouvrant ledit premier ensemble (32) d'objets d'image (12) et comprenant en outre une zone de marge (34 ; 34B) ne recouvrant pas ledit premier ensemble (31) d'objets d'image (12) ;

ladite fusion conditionnelle étant que lesdits objets d'image composites (36) soient présents uniquement à des points auxquels ledit premier ensemble (31) d'objets d'image (12) existe ou à des points auxquels ledit deuxième ensemble (32) d'objets d'image (12) existe mais ladite zone d'enveloppe (35) associée audit premier ensemble (31) d'objets d'image (12) n'existe pas.

2. Dispositif d'image synthétique selon la revendication 1, **caractérisé en ce que** ladite zone d'enveloppe (35) présente une forme principale qui est conforme avec une enveloppe desdits objets d'image (12) dudit premier ensemble (31) d'objets d'image (12).

3. Dispositif d'image synthétique selon la revendication 1 ou 2, **caractérisé en ce qu'**au moins l'une de ladite première image synthétique et de ladite deuxième image synthétique est une image synthétique intégrale.

4. Dispositif d'image synthétique selon la revendication 3, **caractérisé en ce que** ladite première image synthétique est une image synthétique intégrale.

5. Dispositif d'image synthétique selon l'une quelconque des revendications 1 à 4, **caractérisé en ce que** au moins l'une de ladite première image synthétique et de ladite deuxième image synthétique est une image tridimensionnelle.

6. Dispositif d'image synthétique selon l'une quelconque des revendications 1 à 5, **caractérisé en ce que**

ledit premier ensemble (31) d'objets d'image (12) est prévu à l'intérieur d'un ensemble de premières cellules (16), dans lequel chaque dite première cellule (16) est associée à un élément de mise au point (22) respectif dudit réseau d'éléments de mise au point (20) ; et

ladite zone de marge (35) renferme des bords du premier ensemble (31) d'objets d'image (12) ne coïncidant pas avec des bordures desdites premières cellules (16).

7. Dispositif d'image synthétique selon la revendication 6, **caractérisé en ce qu'**une largeur moyenne d'objets de ladite zone de marge (34) se trouve dans la plage de 0,1 % à 10 % d'un diamètre desdits éléments de mise au point (22).

8. Dispositif d'image synthétique selon l'une quelconque des revendications 1 à 7, **caractérisé en ce que** au moins l'un des deux cas suivants s'applique : ledit premier ensemble (31) d'objets d'image (12) engendre ladite première image synthétique lorsqu'il est visualisé à travers ledit réseau d'éléments de mise au point (20) à une distance inférieure à 15 cm et ledit deuxième ensemble (32) d'objets d'image (12) engendre ladite deuxième image synthétique lorsqu'il est visualisé à travers ledit réseau d'éléments de mise au point (20) à ladite distance inférieure à 15 cm.

9. Dispositif d'image synthétique selon l'une quelconque des revendications 1 à 8, **caractérisé en ce que** au moins l'un des deux cas suivants s'applique : ledit premier ensemble (31) d'objets d'image (12) engendre ladite première image synthétique lorsqu'il est visualisé à travers un réseau d'éléments de mise au point (20) plié et ledit deuxième ensemble (32) d'objets d'image (12) engendre ladite deuxième image synthétique lorsqu'il est visualisé à travers ledit réseau d'éléments de mise au point (20) plié.

**10.** Dispositif d'image synthétique selon l'une quelconque des revendications 1 à 9, **caractérisé en ce que**

des objets d'image composites (36) de ladite couche d'image (10) dépendent en outre d'au moins un ensemble supplémentaire (31B, 32B) d'objets d'image (12) ;

ledit ensemble supplémentaire (31B, 32B) d'objets d'image (12) engendre une image synthétique supplémentaire lorsqu'il est placé à proximité d'une distance focale d'éléments de mise au point (22) et visualisé à travers ledit réseau d'éléments de mise au point (20).

**11.** Procédé de production d'un dispositif d'image synthétique, comprenant les étapes suivantes :

- la création (210) d'une représentation numérique d'un premier ensemble d'objets d'image étant agencé pour engendrer au moins une première image synthétique à une hauteur ou profondeur non nulle lorsqu'il est placé à proximité d'une distance focale d'éléments de mise au point et visualisé à travers ledit réseau d'éléments de mise au point ;

- la création (211) d'une représentation numérique d'une zone d'enveloppe associée audit première ensemble d'objets d'image ;

- la création (220) d'une représentation numérique d'un deuxième ensemble d'objets d'image étant agencé pour engendrer au moins une deuxième image synthétique à une hauteur ou profondeur non nulle lorsqu'il est placé à proximité d'une distance focale d'éléments de mise au point et visualisé à travers ledit réseau d'éléments de mise au point ;

ladite zone d'enveloppe dudit premier ensemble d'objets d'image étant une zone recouvrant ledit premier ensemble d'objets d'image et comprenant en outre une zone de marge ne recouvrant pas ledit premier ensemble d'objets d'image ;

- la fusion (230) de ladite représentation numérique dudit première ensemble d'objets d'image, ladite représentation numérique de ladite zone d'enveloppe étant associée audit premier ensemble d'objets d'image et à ladite représentation numérique dudit deuxième ensemble d'objets d'image selon une condition prédéterminée dans une représentation numérique d'objets d'image composites ;

ladite fusion conditionnelle étant que lesdits objets d'image composites soient présents uniquement à des points auxquels ledit premier ensemble d'objets d'image existe ou à des points auxquels ledit deuxième ensemble d'objets d'image existe mais ladite zone d'enveloppe associée audit premier ensemble d'objets d'image n'existe pas ;

- la formation (240) d'une couche d'image selon ladite représentation numérique d'objets d'image composites ; et

- la formation (250) d'un réseau d'éléments de mise au point ;

ladite couche d'image étant agencée à proximité d'une distance focale d'éléments de mise au point dudit réseau d'éléments de mise au point.

Fig. 1A

Fig. 1B

Fig. 1C

Fig. 2

Fig. 4A

Fig. 4B

Fig. 4C

Fig. 3A

Fig. 3B

Fig. 5

Fig. 7

Fig. 6

Fig. 8

Fig. 9A

Fig. 9B

Fig. 10A

Fig. 10B

Fig. 11A

Fig. 11B

Fig. 12A

Fig. 12B    Fig. 12C

Fig. 13A

Fig. 13B

Fig. 15

Fig. 14A

Fig. 14B

Fig. 14C

Fig. 16

Fig. 17A

Fig. 17B

Fig. 18

Fig. 19

START ～200

210

CREATE NUMERICAL
REPRESENTATION OF 1ST
SET OF IMAGE OBJECTS

220

CREATE NUMERICAL
REPRESENTATION OF 2ND
SET OF IMAGE OBJECTS

CREATE NUMERICAL
REPRESENTATION OF
ENVELOPE AREA ～211

MERGE NUMERICAL
REPRESENTATIONS OF 1ST &
2ND SETS OF IMAGE OBJECTS
AND ENVELOPE AREA ～230

FORM IMAGE LAYER
ACCORDING TO NUMERICAL
REPRESENTATION OF
COMPOSITE IMAGE OBJECTS ～240

FORM FOCUSING ELEMENT
ARRAY ～250

Fig. 20

END ～299

START ~200

210

CREATE NUMERICAL
REPRESENTATION OF 1ST
SET OF IMAGE OBJECTS

220

CREATE NUMERICAL
REPRESENTATION OF 2ND
SET OF IMAGE OBJECTS

MERGE NUMERICAL
REPRESENTATIONS OF 1ST &
2ND SETS OF IMAGE OBJECTS ~231

FORM IMAGE LAYER
ACCORDING TO NUMERICAL
REPRESENTATION OF
COMPOSITE IMAGE OBJECTS ~240

FORM FOCUSING ELEMENT
ARRAY ~250

END ~299

Fig. 21

Fig. 22A

Fig. 22B

Fig. 23A

Fig. 23B

Fig. 23C

Fig. 23D

Fig. 23E

Fig. 23F

Fig. 23G

Fig. 23H

Fig. 23I

START ─200

CREATE FOCUSING ELEMENT ARRAY WITH A GEOMETRICAL SYMMETRY ─260

CREATE IMAGE LAYER WITH CELLS ASSOCIATED WITH RESPECTIVE FOCUSING ELEMENTS, WITH CELL SHAPES HAVING A GEOMETRICAL SYMMETRY DIFFERENT FROM FOCUSING ELEMENT ARRAY ─262

ARRANGE IMAGE LAYER IN VICINITY OF FOCUSING ELEMENT FOCAL DISTANCE ─264

Fig. 24    END ─299

START ─200

CREATE FOCUSING ELEMENT ARRAY WITH A GEOMETRICAL SYMMETRY ─260

CREATE IMAGE LAYER WITH IMAGE OBJECTS ARRANGED TO PRESENT DIFFERENT MAGNIFICATIONS IN TWO PERPENDICULAR DIRECTIONS ─263

ARRANGE IMAGE LAYER IN VICINITY OF FOCUSING ELEMENT FOCAL DISTANCE ─264

Fig. 26    END ─299

Fig. 25A

12A
12B
12C
1

10 20 12 16 22

Fig. 25B

20 22 16 1
12
10

Fig. 25C

20 12 22 16 1
12A
12B
12C
12D
10

Fig. 27

16 40 1
12
10

Fig. 28

Fig. 29

START ~200

270

ILLUMINATE
SYNTHETIC-IMAGE
DEVICE FROM A SHORT
DISTANCE BY A LIGHT
SOURCE EMITTING
DIVERGENT RAYS

272

OBSERVING ANY
APPEARANCE OF A
SYNTHETIC IMAGE NOT
BEING PRESENT WITHOUT
ILLUMINATION AS A SIGN OF
AUTHENTICITY

END ~299

Fig. 30

**EP 3 469 574 B1**

**Patent documents cited in the description**

- US 20080037131 A1